(19)

Europäisches
Patentamt
European
Patent Office
Office européen
des brevets

(11)  **EP 4 626 074 A1**

(12)  **EUROPEAN PATENT APPLICATION**
published in accordance with Art. 153(4) EPC

(43) Date of publication:
   **01.10.2025  Bulletin 2025/40**

(21) Application number: **23912615.4**

(22) Date of filing: **30.11.2023**

(51) International Patent Classification (IPC):
   *H04W 28/22* (2009.01)    *H04W 28/02* (2009.01)
   *H04W 76/28* (2018.01)    *H04W 52/02* (2009.01)

(52) Cooperative Patent Classification (CPC):
   **H04W 28/02; H04W 28/22; H04W 52/02;**
   **H04W 76/28**

(86) International application number:
   **PCT/KR2023/019516**

(87) International publication number:
   **WO 2024/143940 (04.07.2024 Gazette 2024/27)**

(84) Designated Contracting States:
   **AL AT BE BG CH CY CZ DE DK EE ES FI FR GB**
   **GR HR HU IE IS IT LI LT LU LV MC ME MK MT NL**
   **NO PL PT RO RS SE SI SK SM TR**
   Designated Extension States:
   **BA**
   Designated Validation States:
   **KH MA MD TN**

(30) Priority:  **28.12.2022  KR 20220187754**

(71) Applicant: **Samsung Electronics Co., Ltd.**
   **Suwon-si, Gyeonggi-do 16677 (KR)**

(72) Inventors:
   • **JO, Yonghee**
    **Suwon-si, Gyeonggi-do 16677 (KR)**
   • **NAM, Yujin**
    **Suwon-si, Gyeonggi-do 16677 (KR)**
   • **JANG, Seowoo**
    **Suwon-si, Gyeonggi-do 16677 (KR)**

(74) Representative: **Arnold & Siedsma**
   **Bezuidenhoutseweg 57**
   **2594 AC The Hague (NL)**

(54)  **METHOD AND BASE STATION FOR ALLOCATING WIRELESS RESOURCES**

(57)  A method, performed by a base station, of allocating a wireless resource according to an embodiment of the present disclosure may include obtaining a cycle parameter indicating a cycle which the base station uses to transmit data to and receive data at least one UE, obtaining downlink data indicating an amount of data in a downlink buffer that is to be transmitted to the at least one UE, generating, based on the obtained cycle parameter and the obtained downlink data, an active UE set including a UE having data to be transmitted to or received from the base station, and allocating the wireless resource to at least one active UE included in the generated active UE set.

FIG. 2

```
START

OBTAIN CYCLE PARAMETER INDICATING CYCLE WHICH
BASE STATION USES TO TRANSMIT/RECEIVE DATA         — S210
TO/FROM AT LEAST ONE UE

OBTAIN DOWNLINK DATA INDICATING AMOUNT OF
DATA IN DOWNLINK BUFFER THAT IS TO BE TRANSMITTED  — S220
TO AT LEAST ONE UE

GENERATE, BASED ON OBTAINED CYCLE PARAMETER
AND DOWNLINK DATA, ACTIVE UE SET INCLUDING UE      — S230
THAT NEEDS TO BE ALLOCATED WIRELESS RESOURCE

ALLOCATE WIRELESS RESOURCE TO AT LEAST ONE         — S240
ACTIVE UE INCLUDED IN GENERATED ACTIVE UE SET

END
```

EP 4 626 074 A1

## Description

TECHNICAL FIELD

The present disclosure relates to a method and base station for allocating wireless resources.

BACKGROUND ART

With the development of communication technology, users can perform various kinds of tasks by communicating with base stations using their user equipments (UEs). For example, users can use their UEs to send or receive voice messages or text messages, play audio or video, or use the Internet.

Base stations use various methods to efficiently allocate resources so that a plurality of UEs can efficiently perform multiple tasks at the same time. The base stations generate an active UE set for UEs having data to transmit and receive and set priorities for the UEs included in the active UE set. Also, the base stations provide users with various services by allocating wireless resources to the UEs based on the priorities.

DISCLOSURE OF INVENTION

SOLUTION TO PROBLEM

In an embodiment, the present disclosure may be implemented in various ways including a method, a system, an apparatus, or a computer program stored on a computer-readable storage medium.

In an embodiment, a method, performed by a base station, of allocating a wireless resource may include obtaining a cycle parameter indicating a cycle which the base station uses to transmit data to and receive data at least one User Equipment (UE). In an embodiment, the method, performed by the base station, of allocating a wireless resource may include obtaining downlink data indicating an amount of data in a downlink buffer that is to be transmitted to the at least one UE. In an embodiment, the method, performed by the base station, of allocating a wireless resource may include generating an active UE set including a UE that needs to be allocated to the wireless resource, based on the obtained cycle parameter and the obtained downlink data. In an embodiment, the method, performed by the base station, of allocating the wireless resource may include allocating the wireless resource to at least one active UE included in the generated active UE set.

In an embodiment, a base station for allocating a wireless resource may include a transceiver, memory storing one or more instructions, and at least one processor connected to the transceiver. In an embodiment, the at least one processor may obtain a cycle parameter indicating a cycle at which the base station uses to transmit data to and receive data at least UE. In an embodiment, the at least one processor may obtain downlink data indicating an amount of data in a downlink buffer that is to be transmitted to the at least one UE. In an embodiment, the at least one processor may generate an active UE set including a UE that needs to be allocated to the wireless resource, based on the obtained cycle parameter and the obtained downlink data. In an embodiment, the at least one processor may allocate the wireless resource to at least one active UE included in the generated active UE set.

BRIEF DESCRIPTION OF DRAWINGS

FIG. 1 shows a communication system including a base station according to an embodiment and a plurality of user equipments (UEs).
FIG. 2 is a flowchart illustrating a method, performed by a base station, of allocating a wireless resource, according to an embodiment.
FIG. 3 is a flowchart illustrating an operation, performed by a base station, of generating an active UE set, according to an embodiment.
FIG. 4 is a flowchart illustrating a method, performed by a base station, of allocating a wireless resource, according to an embodiment.
FIG. 5 is a flowchart illustrating an operation, performed by a base station, of generating a deferred UE set, according to an embodiment.
FIG. 6 is a flowchart illustrating an operation, performed by a base station, of generating an active UE set for each of UEs connected to the base station, according to an embodiment.
FIG. 7 is a flowchart illustrating an operation, performed by a base station, of generating an active UE set by using a deferred UE set for each of UEs connected to the base station, according to an embodiment.
FIG. 8 is a flowchart illustrating an operation, performed by a base station, of generating a deferred UE set for each of UEs connected to the base station, according to an embodiment.
FIG. 9 shows layers of a base station according to an embodiment.
FIG. 10 shows an example of a conventional wireless communication system according to an embodiment.
FIG. 11 shows an example of a wireless communication system of the present disclosure, according to an embodiment.
FIG. 12 shows an example of a wireless communication system of the present disclosure, according to an embodiment. and
FIG. 13 is a block diagram of a base station for allocating a wireless resource, according to an embodiment.

DETAILED DESCRIPTION

Although general terms being currently widely used were selected as terminology used in the present disclosure while considering the functions of the present disclosure, they may vary according to intentions of one of ordinary skill in the art, judicial precedents, the advent of new technologies, and the like. Terms arbitrarily selected by the applicant of the present disclosure may also be used in a specific case. In this case, their meanings will be described in detail in the detailed description of the present disclosure. Hence, the terms used in the present disclosure must be defined based on the meanings of the terms and the entire contents of the present disclosure, not by simply stating the terms themselves.

The singular forms "a," "an," and "the" include plural referents unless the context clearly dictates otherwise. All technical or scientific terms used herein have the same meaning as commonly understood by one of ordinary skill in the technical art written in the present disclosure. Also, in the present disclosure, although the terms including ordinal numbers, such as "first", "second", etc., may be used herein to describe various components, these components should not be limited by these terms. These terms are only used to distinguish one component from another.

In the present disclosure, it will be understood that when a certain part "includes" a certain component, the part does not exclude another component but can further include another component, unless the context clearly dictates otherwise. In addition, the terms "portion", "part", "module", etc. used in this disclosure refer to a unit for processing at least one function or operation, which is implemented as hardware, software, or a combination of hardware and software.

Hereinafter, an embodiment of the present disclosure will be described in detail with reference to the accompanying drawings such that one of ordinary skill in the technical art to which the present disclosure belongs can easily embody the embodiment. The present disclosure may, however, be embodied in many different forms without being limited to the embodiment set forth herein. Also, in the drawings, portions that are irrelevant to the descriptions may not be shown in order to clarify the present disclosure, and throughout the disclosure, similar portions are assigned similar reference numerals. Also, reference numerals used in the respective drawings are for the purpose of describing the drawings, and different reference numerals used in different drawings may not represent different components. Hereinafter, the present disclosure will be described in detail with reference to the accompanying drawings.

In the present disclosure, an 'active user equipment (UE) set' may refer to a set of UEs that need to be allocated wireless resources among UEs connected to a base station. Also, in a medium access control layer that performs resource allocation, an 'active UE set' may refer to a set of UEs for which priorities for allocating resources need to be set.

In the present disclosure, a 'deferred UE set' may be a set of UEs deferred from being allocated wireless resources by a base station by deferring including the UEs in an active UE set.

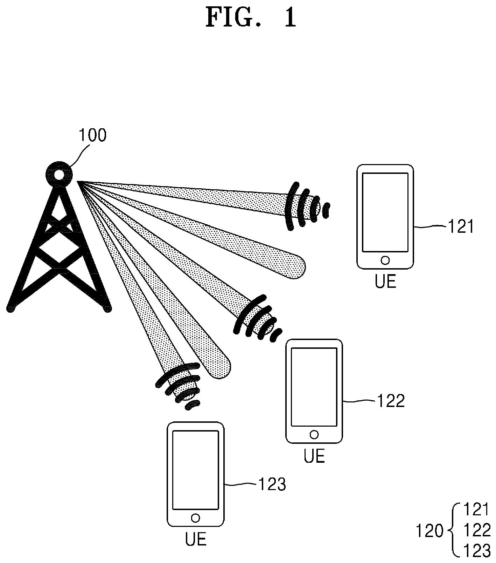

FIG. 1 shows a communication system including a base station according to an embodiment and a plurality of user equipments.

Referring to FIG. 1, the communication system may include a base station 100 and at least one user equipment (UE) 120. As shown, the communication system may be configured as a cellular network where the at least one UE 120 is connected to a single base station. The present disclosure is not limited to the above example. Also, the at least one UE 120 may include a first UE 121, a second UE 122, and a third UE 123. The number of the at least one UE 120 included in the communication system is not limited to that shown in FIG. 1.

In an embodiment, the at least one UE 120 may be connected to the base station 100 to request allocation of a wireless resource to the base station 100, and the base station 100 may allocate a wireless resource to the at least one UE in response to the request. In various embodiments, a wireless resource is a limited resource that is shared by only the limited number of users at a certain time, and the wireless resource may be understood as a frequency resource for wireless communication.

In an embodiment, a wireless resource may be a resource block (RB) in wireless communication based on orthogonal frequency division multiplexing (OFDM). For example, an overall system bandwidth may be quantized into resource blocks each of which is a basic unit of resource allocation for a time slot. The number of resource blocks may be set by communication numerology and a system bandwidth.

In an embodiment, the at least one UE 120 may request the base station 100 to allocate wireless resources at the same time to perform various tasks. For example, the first UE 121 and the second UE 122 may request allocation of wireless resources at the same time. More specifically, the first UE 121 may request allocation of a wireless resource to use the Internet, and the second UE 122 may request allocation of a wireless resource for a voice call. At the time at which the first UE 121 and the second UE 122 request allocation of wireless resources, the third UE 123 may not request allocation of a wireless resource.

In an embodiment, the base station 100 may generate an active UE set including UEs to which wireless resources will be allocated, in response to the request for allocation of wireless resources from the at least one UE 120. In the case in which UEs requested allocation of wireless resources are the first UE 121 and the second UE 122, the base station 100 may include the first UE 121 and the second UE 122 in the active UE set. The base station 100 may split data to be transmitted/received to/from the first UE and the second UE included in the active UE set into packets each having a preset length to obtain a plurality of packets, and set priorities for the plurality of packets. The base station 100 may allocate wireless resources to the plurality of packets, sequentially, according to the set priorities, and the at least UE 120 may perform a desired task.

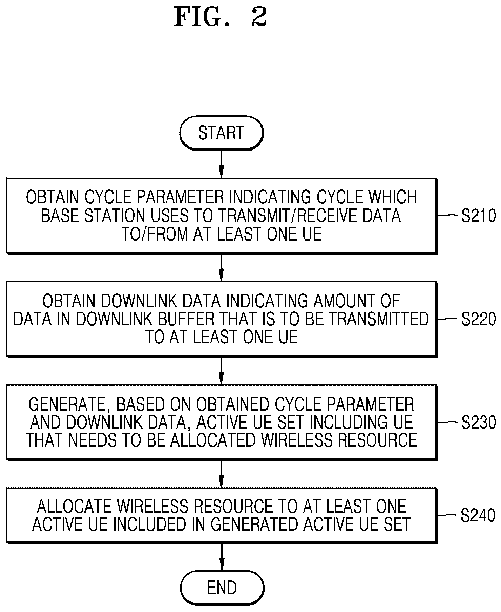

FIG. 2 is a flowchart illustrating a method, performed by the base station 100, of allocating a wireless resource, according to an embodiment.

A method, performed by the base station 100, of allocating a wireless resource may include operations S210 to S240. In an embodiment, operations S210 to S240 may be executed by at least one processor included in the base station 100. In an embodiment, the method, performed by the base station 100, of allocating the wireless resource is not limited to that shown in FIG. 2, and may further include an operation not shown in FIG. 2.

In operation S210, the base station 100 may obtain a cycle parameter indicating a cycle which the base station 100 uses to transmit/receive data to/from at least one UE. In an embodiment, to reduce battery consumption of at least one UE, a specific UE may identify whether there is data to be transmitted/received to/from the base station 100, at specific cycles. In the case in which there is no data to be transmitted/received to/from the base station 100, the specific UE may reduce battery power by cutting off power used to perform a data transmission/reception function. In the present disclosure, the 'cycle parameter' may indicate a cycle at which it is identified whether there is data to be transmitted/received between the base station 100 and a UE.

In an embodiment, when a UE is initially attached to the base station 100, the base station 100 may transmit a cycle parameter to the UE. The cycle parameter may be a Discontinuous Reception (DRX) cycle used to perform a Connected mode Discontinuous Reception (C-DRX) function. The DRX cycle may be ShortDRXCycle or LongDRXCycle. Meanwhile, the cycle parameter is not limited to the DRX cycle and may indicate information about a cycle at which it is identified whether there is data to be transmitted/received between the base station 100 and a UE.

In operation S220, the base station 100 may obtain downlink data that indicates an amount of data in a downlink buffer that needs to be transmitted to the at least one UE. In an embodiment, the base station 100 may identity data that needs to be transmitted to the at least one UE in a downlink buffer including the data and obtain downlink data indicating an amount of the data in the downlink buffer.

In an embodiment, in the case in which the base station 100 has no data to transmit to a specific UE, the base station 100 may identify or obtain downlink data for the specific UE as 0. In the case in which the base station 100 has data to transmit to a specific UE, the base station 100 may identify downlink data for the specific UE as a value that is greater than 0. It may be understood that the base station 100 has "identified downlink data' for a specific UE, meaning that the downlink data for the specific UE has a value that is greater than 0.

In operation S230, the base station 100 may generate an active UE set including a UE which needs to be allocated to a wireless resource, based on the obtained cycle parameter and downlink data. In an embodiment, the base station 100 may identify downlink data for a specific UE and include the specific UE in an active UE set according to satisfaction of a specific condition based on the cycle parameter.

In an embodiment, the specific condition based on the cycle parameter may be a condition related to latency or user perceived throughout (UPT). For example, the base station 100 may compare expected latency for the specific UE to threshold latency, and according to the expected latency being less than the threshold latency, the base station 100 may determine not to include the specific UE in the active UE set. Also, the base station 100 may compare expected UPT for the specific UE to threshold UPT, and according to the expected UPT being greater than or equal to the threshold UPT, the base station 100 may determine not to include the specific UE in the active UE set.

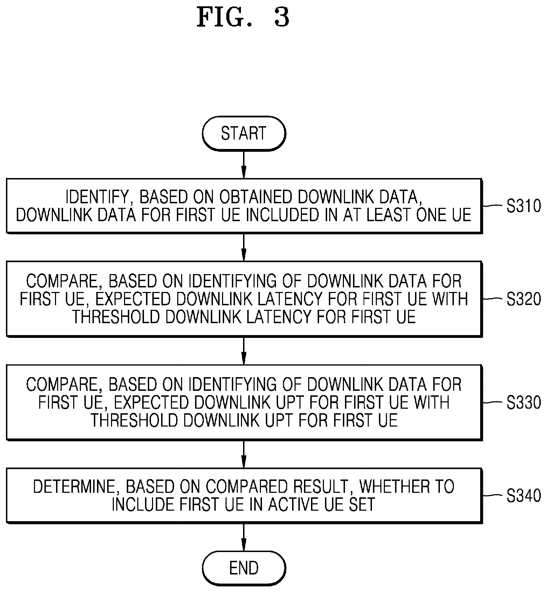

In an embodiment, 'latency' may be understood as a time between when a packet arrives in a buffer within a medium access control (MAC) layer and when the packet actually begins to be transmitted. However, when a packet does not actually begin to be transmitted, 'latency' may be understood as a time between when the packet arrives in a buffer and a current time. Meanwhile, 'latency' for uplink may be understood as a time between when a base station obtains a buffer status report (BSR) from a UE and when uplink data begins to be transmitted to the base station. In an embodiment, 'expected latency' may be understood as expected latency at a time (hereinafter, an allocation expected time) at which a wireless resource is expected to be allocated in a next cycle. In an embodiment, 'UPT' may be, for each UE, an amount of data that is processed for a time between when data in a buffer is identified and when the data in the buffer is processed, and may be understood as an amount of data that is processed per unit time. In an embodiment, expected UPT may be understood as an amount of data that is processed per unit time, predicted by considering expected latency and an amount of data expected to be additionally generated at an expected allocation time. The threshold latency and the threshold UPT will be described in detail with reference to FIG. 3.

In operation S240, a wireless resource may be allocated to at least one active UE included in the generated active UE set. In an embodiment, the base station 100 may split data to be transmitted or received into a plurality of packets based on the generated active UE set, set priorities of the plurality of packets, and sequentially allocate wireless resources to the plurality of packets according to the set priorities. Also, the base station 100 may transmit data to a UE by using an allocated wireless resource.

In an embodiment, the base station 100 may allocate a wireless resource to a UE in order to transmit data to the UE, or allocate a wireless resource to a UE in order to receive data from the UE. For wireless resource allocation, the base station 100 may perform an operation of generating an active UE set including UEs to which wireless resources will be allocated, according to the present disclosure.

Operations S210 to S240 may be operations in which the base station 100 allocates a wireless resource to a UE in order to transmit (e.g., downlink) data to the UE. However, operations of allocating a wireless resource to a UE to enable the UE to transmit (e.g., uplink) data to the base station 100 may also be performed in correspondence to operations S210 to S240.

For example, the base station 100 may obtain uplink data indicating an amount of data included in an uplink buffer, based on a BSR reported from UEs connected to the base station 100, and identify the uplink data. Also, the base station 100 may generate an active UE set including a UE to which a wireless resource needs to be allocated, based on the cycle parameter and the uplink data. The base station 100 may allocate a wireless resource based on the generated active UE set and receive data from a specific UE by using the allocated wireless resource.

FIG. 3 is a flowchart illustrating an operation, performed by a base station, of generating an active UE set, according to an embodiment.

Referring to FIG. 3, an operation, performed by the base station 100 according to an embodiment, of generating an active UE set may include operations S310 to S340. In an embodiment, operations S310 to S340 may be performed by at least one processor included in the base station 100. The operation, performed by the base station 100, of generating an active UE set is not limited to operations and an order shown in FIG. 3. Also, the operation may further include an operation not shown in FIG. 3.

In operation S310, the base station 100 may identify downlink data for a first UE included in at least one UE, based on obtained downlink data. In an embodiment, downlink data may be understood as an amount of data in a downlink buffer for UEs connected to the base station 100, and downlink data for a specific UE may be understood as an amount of data in a downlink buffer for the specific UE.

In an embodiment, the base station 100 may identify downlink data for the first UE included in at least one UE connected to the base station 100, based on the obtained downlink data. Identifying downlink data for the first UE may mean that downlink data for the first UE is greater than 0.

In operation S320, based on identifying of the downlink data for the first UE, the base station 100 may compare expected downlink latency for the first UE to threshold downlink latency for the first UE. In an embodiment, according to identifying of the downlink data for the first UE, the base station 100 may compare the expected downlink latency for the first UE to the threshold downlink latency in order to determine whether to include the first UE in the active UE set.

In an embodiment, expected downlink latency may be a value obtained by adding a cycle parameter to downlink latency for a specific UE at a current time. For example, when expected downlink latency is $\widehat{L}_{Next}^{DL}$, downlink latency at a current time is $L_{Current}^{DL}$, and a cycle parameter is $T_{Cycle}$, the expected downlink latency may be expressed as

$$\widehat{L}_{Next}^{DL} = L_{Current}^{DL} + T_{Cycle}$$

. The current time may be understood as a preset time at which an active UE set is generated to allocate a wireless resource to the specific UE (e.g., the first UE). Meanwhile, a method of expressing expected downlink latency is not limited thereto. In an embodiment, the expected latency for the first UE may be expressed by the above-described method.

In an embodiment, threshold downlink latency may be expressed identically or differently for each UE based on a quality of service (QoS) class indicator (QCI) of a logical channel of the base station 100. Also, in the case in which different services are provided for the same UE, different threshold downlink latency may be set. A QCI may indicate a QoS priority and include information about packet delay tolerance or packet loss tolerance.

In an embodiment, threshold downlink latency may be understood as threshold latency for at least one service. Threshold downlink latency for a voice call service or a video call service that will be transmitted to a specific UE may be relatively low. Threshold downlink latency for an Internet service that will be transmitted to a specific UE may be relatively high. Threshold downlink latency for a specific UE may be a value set in advance by the base station 100. For example, threshold downlink latency may be a value set by a specific algorithm or Artificial Intelligence (AI) model. Also, threshold downlink latency for a specific UE may be expressed as $L_{th}^{DL}$. In an embodiment, the threshold downlink latency for the first UE may be expressed by the above-described method.

In an embodiment, the base station 100 may compare the expected downlink latency for the first UE to the threshold download latency for the first UE. For example, the base station 100 may identify whether the expected downlink latency for the first UE is greater than or equal to the threshold downlink latency or less than the threshold downlink latency. Also, according to expected downlink latency for at least one service provided for the first UE being greater than or equal to the threshold downlink latency, the base station 100 may identify that the expected downlink latency for the first UE is greater than or equal to the threshold downlink latency. Meanwhile, a method by which the base station 100 compares expected downlink latency to threshold downlink latency is not limited thereto.

In operation S330, based on identifying of the downlink data for the first UE, the base station 100 may compare expected downlink UPT for the first UE to threshold downlink UPT for the first UE. In an embodiment, according to identifying of the downlink data for the first UE, the base station 100 may compare the expected downlink UPT for the first UE to the threshold UPT in order to determine whether to include the first UE in an active UE set.

In an embodiment, expected downlink UPT may be understood as an expected amount of data that is transmitted from the base station 100 to a UE per unit time. In an embodiment, expected downlink UPT may be expressed as a value obtained by dividing a sum of an amount of downlink data that needs to be transmitted at a current time and an expected amount of downlink data at a next allocation check time by a sum of expected downlink latency and a downlink delay. When expected downlink UPT is $\widehat{R}^{DL}_{Next}$, an amount of downlink data that needs to be transmitted at a current time is $V^{DL}_{Current}$, an expected amount of downlink data expected to need to be transmitted at a next allocation check time is $\widehat{V}^{DL}_{Next}$, expected downlink latency is $\widehat{L}^{DL}_{Next}$, and a downlink delay is $D^{DL}_{Current}$, the expected downlink UPT may be expressed as

$$\widehat{R}^{DL}_{Next} = \frac{V^{DL}_{Current} + \widehat{V}^{DL}_{Next}}{\widehat{L}^{DL}_{Next} + D^{DL}_{Current}}$$

. In the present disclosure, a downlink delay may be a time taken for data transmitted from the base station 100 to a UE to be received by the UE. Meanwhile, a method by which expected downlink UPT is expressed is not limited thereto. In an embodiment, the expected UPT for the first UE may be expressed by the above-described method.

In an embodiment, the threshold downlink UPT for the first UE may be set differently based on a QCI of a logical channel of the base station 100. In an embodiment, the threshold downlink UPT for the first UE may be understood as threshold downlink UPT for at least one service. Threshold downlink UPT for a voice call service or a video call service that will be transmitted to the first UE may be relatively high. Threshold downlink UPT for an Internet service that will be transmitted to the first UE may be relatively low. Threshold latency may be a value set in advance by the base station 100. For example, threshold downlink UPT may be a value set by a specific algorithm or AI model. Also, threshold downlink UPT for a specific UE may be expressed as $R^{DL}_{th}$. In an embodiment, threshold downlink UPT for the first UE may also be expressed by the above-described method.

In an embodiment, the expected downlink UPT for the first UE may be compared to the threshold downlink UPT for the first UE. For example, whether the threshold downlink UPT for the first UE is greater than or equal to the threshold downlink UPT or less than the threshold downlink UPT may be identified. In an embodiment, in the case in which expected downlink UPT for at least one service that the base station 100 provides to the first UE is less than the threshold downlink UPT, the expected downlink UPT for the first UE may be identified as being less than the threshold downlink UPT. Meanwhile, a method of comparing expected downlink UPT to threshold downlink UPT is not limited thereto.

In operation S340, it may be determined whether to include the first UE in the active UE set, based on the compared result in operation S320 or operation S330.

In an embodiment, based on the compared result between the expected downlink latency for the first UE and the threshold downlink latency or the compared result between the expected downlink UPT for the first UE and the threshold downlink UPT, the base station 100 may determine whether to include the first UE in the active UE set.

In an embodiment, when the base station 100 identifies downlink data for the first UE, a comparing operation of operation S320 or operation S330 may be performed. When the base station 100 fails to identify downlink data for the first UE, the base station 100 may not include the first UE in the active UE set without performing operation S320 or operation S330.

In an embodiment, according to the base station 100 identifying that the expected downlink latency for the first UE is greater than or equal to the threshold downlink latency for the first UE in operation S320, the base station 100 may include the first UE in the active UE set.

In an embodiment, according to the base station 100 identifying that the expected downlink UPT for the first UE is less than the threshold downlink UPT for the first UE in operation S330, the base station 100 may include the first UE in the active UE set.

In an embodiment, according to the base station 100 identifying that the expected downlink latency for the first UE is less than the threshold downlink latency for the first UE and the expected downlink UPT for the first UE is greater than or equal to the threshold downlink UPT for the first UE, in operation S320 and operation S330, the base station 100 may determine not to include the first UE in the active UE set.

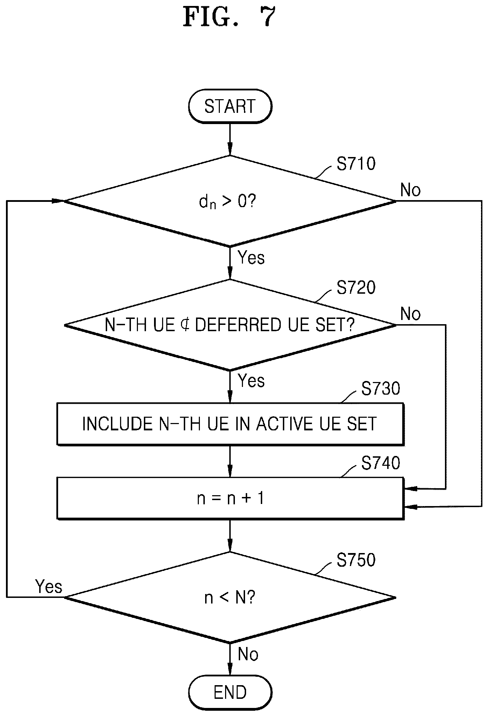

Meanwhile, the method of FIG. 3 may be performed by the base station 100, which determines whether to include a single UE (first UE) connected to the base station 100 in an active UE set, and the same or similar operations may be performed on UEs connected to the base station 100. An operation, performed by the base station 100, of determining whether to include UEs connected to the base station 100 in an active UE set will be described in detail with reference to FIG. 7.

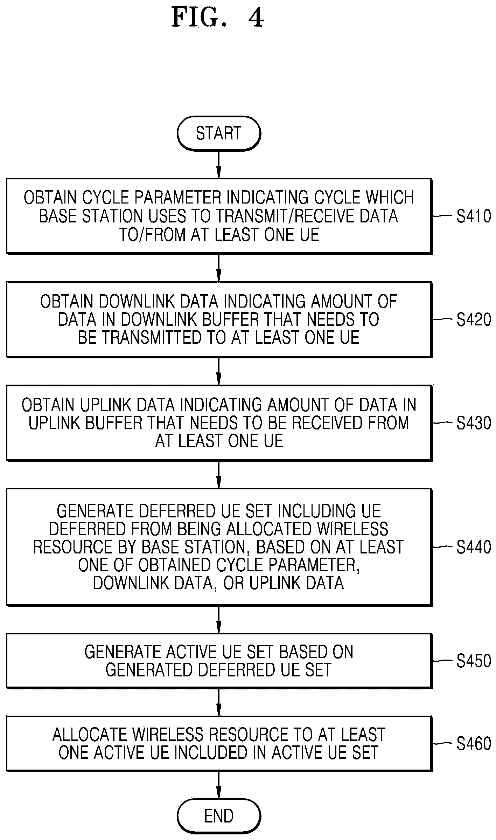

FIG. 4 is a flowchart illustrating a method, performed by a base station, of allocating a wireless resource, according to an embodiment.

Referring to FIG. 4, the method, performed by the base station 100, of allocating a wireless resource may include operations S410 to S460. In an embodiment, operations S410 to S460 may be executed by at least one processor included in the base station 100. In an embodiment, a method, performed by the base station 100, of allocating a wireless resource is not limited to that shown in FIG. 4, and may further include an operation not shown in FIG. 4.

In operation S410, the base station 100 may obtain a cycle parameter indicating a cycle used to transmit/receive data to/from at least one UE. Operation S410 may correspond to operation S210 of FIG. 2, and therefore, overlapping descriptions will be omitted.

In operation S420, the base station 100 may obtain downlink data indicating an amount of data in a downlink buffer that needs to be transmitted to at least one UE. Operation S420 may correspond to operation S220 of FIG. 2, and therefore, overlapping descriptions will be omitted.

In operation S430, the base station 100 may obtain uplink data indicating an amount of data in an uplink buffer that needs to be received from at least one UE. In an embodiment, the base station 100 may identify data in an uplink buffer including data that needs to be received from at least one UE, and obtain uplink data indicating an amount of the data in the uplink buffer.

In an embodiment, when there is no data to be received from a specific UE, the base station 100 may identify or obtain uplink data for the specific UE as 0. When the base station 100 has data to be received from a specific UE, the base station 100 may identify uplink data for the specific UE as a value that is greater than 0. It may be understood that the base station 100 has "identified uplink data' for a specific UE, meaning that the uplink data for the specific UE has a value that is greater than 0.

In an embodiment, the uplink data may be obtained based on a BSR reported from UEs connected to the base station 100. A UE may transmit a scheduling request (SR) to the base station 100 in order to transmit data to the base station 100. A SR may be a signal used to notify that a UE has data to transmit to the base station 100. A SR may be a signal indicating whether or not a UE has data to transmit to the base station 100, not indicating information about an amount of data that the UE will transmit to the base station 100. The base station 100 may allocate a preset resource to the UE that has transmitted the SR, in response to the SR. The UE may transmit a BSR by using the allocated, preset resource. The BSR may include information about an amount of data that exists in a transfer buffer of the UE.

In operation S440, the base station 100 may generate a deferred UE set including a UE deferred from being allocated to a wireless resource by the base station 100, based on the obtained cycle parameter, downlink data, and uplink data. In an embodiment, the base station 100 may identify downlink data or uplink data for a specific UE, and according to satisfaction of a specific condition based on a cycle parameter, the base station 100 may include the specific UE in the deferred UE set.

In an embodiment, the specific condition based on the cycle parameter may be a condition related to latency or UPT. For example, the base station 100 may compare expected latency for a specific UE to threshold latency, and according to the expected latency being less than the threshold latency and expected UPT being greater than or equal to threshold UPT, the base station 100 may determine to include the specific UE in the deferred UE set.

In operation S450, the base station 100 may generate an active UE set based on the generated deferred UE set. For example, in the case in which an arbitrary UE included in UEs connected to the base station 100 is included in the deferred UE set, the base station 100 may determine not to include the arbitrary UE in the active UE set.

In an embodiment, the base station 100 may identify uplink data or downlink data for a specific UE connected to the base station 100. In this case, according to the specific UE being included in the deferred UE set, the base station 100 may not include the specific UE in the active UE set. Also, in this case, according to the specific UE being not included in the deferred UE set, the base station 100 may include the specific UE in the active UE set.

In an embodiment, when the base station 100 fails to identify uplink data or downlink data for a specific UE, the base station 100 may not include the specific UE in the active UE set. Meanwhile, in this case, the specific UE may not be included even in the deferred UE set.

In operation S460, the base station 100 may allocate a wireless resource to at least one active UE included in the generated active UE set. Operation S460 may correspond to operation S240 of FIG. 2, and therefore, overlapping descriptions will be omitted.

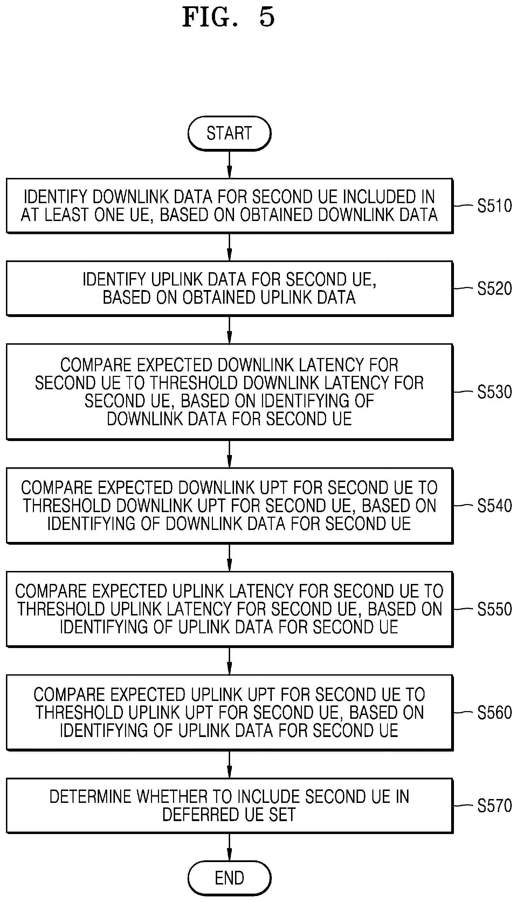

FIG. 5 is a flowchart illustrating an operation, performed by the base station 100, of generating a deferred UE set, according to an embodiment.

Referring to FIG. 5, a method, performed by the base station 100, of generating a deferred UE set may include operations S510 to S560. In an embodiment, operations S510 to S560 may be executed by at least one processor included in the base station 100. In an embodiment, the method, performed by the base station 100, of generating a deferred UE set is not limited to that shown in FIG. 5, and may further include an operation not shown in FIG. 5.

In operation S510, the base station 100 may identify downlink data for a second UE included in at least one UE, based on obtained downlink data. Operation S510 may correspond to operation S310 of FIG. 3, except that operation S510 is performed on the second UE, and therefore, overlapping descriptions will be omitted.

In operation S520, the base station 100 may identify uplink data for the second UE based on obtained uplink data. In an embodiment, the base station 100 may identify uplink data for the second UE included in the at least one UE based on the obtained uplink data. In an embodiment, uplink data may be understood as an amount of data in an uplink buffer for UEs connected to the base station 100, and uplink data for a specific UE may be understood as an amount of data in an uplink buffer for the specific UE.

In an embodiment, the base station 100 may identify uplink data for the second UE included in at least one UE connected to the base station 100, based on the obtained uplink data. Identifying uplink data for the second UE may mean that the uplink data for the second UE is greater than 0.

In operation S530, based on identifying of the downlink data for the second UE, the base station 100 may compare expected downlink latency for the second UE to threshold downlink latency for the second UE. In an embodiment, according to identifying of the downlink data for the second UE, the base station may compare the expected downlink latency for the second UE to the threshold latency in order to determine whether to include the second UE in a deferred UE set.

In an embodiment, the expected downlink latency for the second UE and the threshold latency for the second UE may be expressed in the same manner as disclosed in operation S320. For example, the expected downlink latency for the second UE may be expressed as

$$\widehat{L}_{Next}^{DL} = L_{Current}^{DL} + T_{Cycle}$$ , and the threshold downlink latency for the second UE may be expressed as $L_{th}^{DL}$ .

In an embodiment, the base station 100 may compare the expected downlink latency for the second UE to the threshold downlink latency for the second UE. For example, the base station 100 may identify whether the expected downlink latency is greater than or equal to the threshold downlink latency or less than the threshold downlink latency. Also, according to expected downlink latency for at least one service provided by the base station 100 to the second UE being greater than or equal to the threshold downlink latency, the base station 100 may identify that the expected downlink latency for the second UE is greater than or equal to the threshold downlink latency. Meanwhile, a method of comparing expected downlink latency to threshold downlink latency is not limited thereto.

In operation S540, based on identifying of the downlink data for the second UE, the base station 100 may compare expected downlink UPT for the second UE to threshold downlink UPT.

In an embodiment, the expected downlink UPT for the second UE and the threshold UPT for the second UE may be expressed in the same manner as disclosed in operation S330. For example, the expected downlink UPT for the second UE may be expressed as

$$\widehat{R}_{Next}^{DL} = \frac{V_{Current}^{DL} + \widehat{V}_{Next}^{DL}}{\widehat{L}_{Next}^{DL} + D_{Current}^{DL}}$$ , and the threshold downlink UPT for the second UE may be expressed as $R_{th}^{DL}$ .

In an embodiment, the base station 100 may compare the expected downlink UPT for the second UE to the threshold downlink UPT for the second UE. For example, the base station 100 may identify whether the expected downlink UPT for the second UE is greater than or equal to the threshold downlink UPT or less than for the threshold downlink UPT. In an embodiment, according to expected downlink UPT for at least one service provided by the base station 100 to the second UE being less than the threshold downlink UPT, the base station 100 may identify that the expected downlink UPT for the second UE is less than the threshold downlink UPT. Meanwhile, a method of comparing expected downlink UPT to threshold downlink UPT is not limited thereto.

In operation S550, based on identifying of the uplink data for the second UE, the base station 100 may compare expected uplink latency for the second UE to threshold uplink latency for the second UE. In an embodiment, according to identifying of the uplink data for the second UE, the base station 100 may compare the expected uplink latency for the second UE to the threshold uplink latency for the second UE in order to determine whether to include the second UE in the deferred UE set.

In an embodiment, expected uplink latency may be a value obtained by adding a cycle parameter to uplink latency for a specific UE at a current time. For example, when expected uplink latency is $\widehat{L}_{Next}^{UL}$ , uplink latency at a current time is $L_{Current}^{UL}$ , and a cycle parameter is $T_{Cycle}$ , the expected uplink latency may be expressed as $\widehat{L}_{Next}^{UL} = L_{Current}^{UL} + T_{Cycle}$ . Meanwhile, a method of expressing expected uplink latency is not limited thereto. In an embodiment, expected latency for the second UE may be expressed by the above-described method.

In an embodiment, threshold uplink latency may be expressed identically or differently for each UE based on a QCI of a logical channel group of the UE. Also, in the case in which different services are provided for the same UE, different threshold uplink latency may be set.

In an embodiment, threshold uplink latency may be understood as threshold latency for at least one service. Threshold uplink latency for a voice call service or a video call service that will be transmitted to a specific UE may be relatively low. Threshold uplink latency for an Internet service that will be transmitted to a specific UE may be relatively high. Threshold uplink latency for a specific UE may be a value set in advance by the base station 100. For example, threshold uplink latency may be a value set by a specific algorithm or AI model. Also, threshold latency for a specific UE may be expressed as $L_{th}^{UL}$. In an embodiment, threshold downlink latency for the second UE may be expressed by the above-described method.

In an embodiment, the base station 100 may compare expected uplink latency for the second UE to threshold uplink latency for the second UE. For example, the base station 100 may identify whether the expected uplink latency for the second UE is greater than or equal to the threshold uplink latency or less than the threshold uplink latency. Also, according to expected uplink latency for at least one service provided by the base station 100 to the second UE being greater than or equal to the threshold uplink latency, the base station 100 may identify that the expected uplink latency for the second UE is greater than or equal to the threshold uplink latency. Meanwhile, a method of comparing expected uplink latency to threshold uplink latency is not limited thereto.

In operation S560, based on identifying of the uplink data for the second UE, the base station 100 may compare expected uplink UPT for the second UE to threshold uplink UPT for the second UE.

In an embodiment, according to identifying of the uplink data for the second UE, the base station 100 may compare the expected uplink UPT for the second UE to the threshold uplink UPT for the second UE in order to determine whether to include the second UE in the deferred UE set.

In an embodiment, expected uplink UPT may be understood as an expected amount of data received by the base station 100 from a UE per unit time. In an embodiment, expected uplink UPT may be expressed as a value obtained by dividing a sum of an amount of uplink data that needs to be transmitted at a current time and an expected amount of uplink data at an expected next allocation time by a sum of expected uplink latency and a uplink delay. When expected uplink UPT is $\hat{R}_{Next}^{UL}$, an amount of uplink data that needs to be transmitted at a current time is $V_{Current}^{UL}$, an expected amount of uplink data expected to need to be transmitted at a next allocation check time is $\hat{V}_{Next}^{UL}$, expected uplink latency is $\hat{L}_{Next}^{UL}$, and a current uplink delay is $D_{Current}^{UL}$, the expected uplink UPT may be expressed as

$$\hat{R}_{Next}^{UL} = \frac{V_{Current}^{UL} + \hat{V}_{Next}^{UL}}{\hat{L}_{Next}^{UL} + D_{Current}^{UL}}$$

. In the present disclosure, a uplink delay may be a time taken for data transmitted from a UE to the base station 100 to be received by the base station 100. Meanwhile, a method of expressing expected uplink UPT is not limited thereto. In an embodiment, expected UPT for the second UE may be expressed by the above-described method.

In an embodiment, threshold uplink UPT for the second UE may be set differently based on a QCI of a logical channel group of the UE. In an embodiment, threshold uplink UPT for the second UE may be understood as threshold uplink UPT in at least one service. Threshold uplink UPT for a voice call service or a video call service that will be transmitted to the second UE may be relatively high. Threshold uplink UPT for an Internet service that will be transmitted to the second UE may be relatively low. The threshold latency may be a value set in advance by the base station 100. For example, the threshold uplink UPT may be a value set by a specific algorithm or AI model. Also, threshold uplink UPT for a specific UE may be expressed as $R_{th}^{UL}$. In an embodiment, threshold uplink UPT for the second UE may also be expressed by the above-described method.

In an embodiment, the base station 100 may compare the expected uplink UPT for the second UE to the threshold uplink UPT for the second UE. For example, the base station 100 may identify whether the expected uplink UPT for the second UE is greater than or equal to the threshold uplink UPT or less than the threshold uplink UPT. In an embodiment, according to expected uplink UPT for at least one service provided by the base station 100 to the second UE being less than the threshold uplink UPT, the base station 100 may identify that the expected uplink UPT for the second UE is less than the threshold uplink UPT. Meanwhile, a method of comparing expected uplink UPT to threshold uplink UPT is not limited thereto.

In operation S570, the base station 100 may determine whether to include the second UE in the deferred UE set, based on the compared result in at least one of operations S530 to S560.

In an embodiment, the base station 100 may determine whether to include the second UE in the deferred UE set, based on the compared result between the expected downlink latency for the second UE and the threshold downlink latency, the compared result between the expected downlink UPT for the second UE and the threshold downlink UPT, the compared result between the expected uplink latency for the second UE and the threshold uplink latency, and the compared result between the expected uplink UPT for the second UE and the threshold uplink UPT.

In an embodiment, in the case in which the base station 100 identifies downlink data for the second UE, the base station 100 may perform the comparing operation of operation S530 or operation S540. In the case in which the base station 100 fails to identify downlink data for the second UE, the base station 100 may not perform the comparing operation of operation S530 or operation S540.

In an embodiment, in the case in which the base station 100 identifies uplink data for the second UE, the base station 100 may perform the comparing operation of operation S550 or operation S560. In the case in which the base station 100 fails to identify uplink data for the second UE, the base station 100 may not perform the comparing operation of operation S550 or operation S560.

In an embodiment, in the case in which the base station 100 fails to identify any of downlink data or uplink data for the second UE, the base station 100 may not perform any of operations S530 to S560. In this case, the base station 100 may not include the second UE in the deferred UE set.

In an embodiment, when the base station 100 identifies downlink data for the second UE and identifies that expected downlink latency for the second UE is greater than or equal to the threshold downlink latency for the second UE in operation S530, the base station 100 may not include the second UE in the deferred UE set.

In an embodiment, when the base station 100 identifies downlink data for the second UE and identifies that expected downlink UPT for the second UE is less than the threshold downlink UPT for the second UE in operation S540, the base station 100 may not include the second UE in the deferred UE set.

In an embodiment, when the base station 100 identifies uplink data for the second UE and identifies that expected uplink latency for the second UE is greater than or equal to the threshold uplink latency for the second UE in operation S550, the base station 100 may not include the second UE in the deferred UE set.

In an embodiment, when the base station 100 identifies uplink data for the second UE and identifies that expected uplink latency for the second UE is less than the threshold uplink latency for the second UE in operation S560, the base station 100 may not include the second UE in the deferred UE set.

In an embodiment, in response to the base station 100 identifying only downlink data for the second UE and failing to identify uplink data, when the base station 100 identifies that expected downlink latency for the second UE is less than the threshold downlink latency for the second UE in operations S530 and S540 and expected downlink UPT for the second UE is greater than or equal to the threshold downlink UPT for the second UE, the base station 100 may include the second UE in the deferred UE set.

In an embodiment, in response to the base station 100 identifying only uplink data for the second UE and failing to identify downlink data, when the base station 100 identifies that expected uplink latency for the second UE is less than the threshold uplink latency for the second UE in operations S550 and S560 and expected uplink UPT for the second UE is greater than or equal to the threshold uplink UPT for the second UE, the base station 100 may include the second UE in the deferred UE set.

In an embodiment, in response to the base station 100 identifying downlink data and uplink data for the second UE, when the base station 100 identifies that expected downlink latency for the second UE is less than the threshold downlink latency for the second UE in operations S530 to S560, expected downlink UPT for the second UE is greater than or equal to the threshold downlink UPT for the second UE, expected uplink latency for the second UE is less than the threshold uplink latency for the second UE, and expected uplink UPT for the second UE is greater than or equal to the threshold uplink UPT for the second UE, the base station 100 may include the second UE in the deferred UE set.

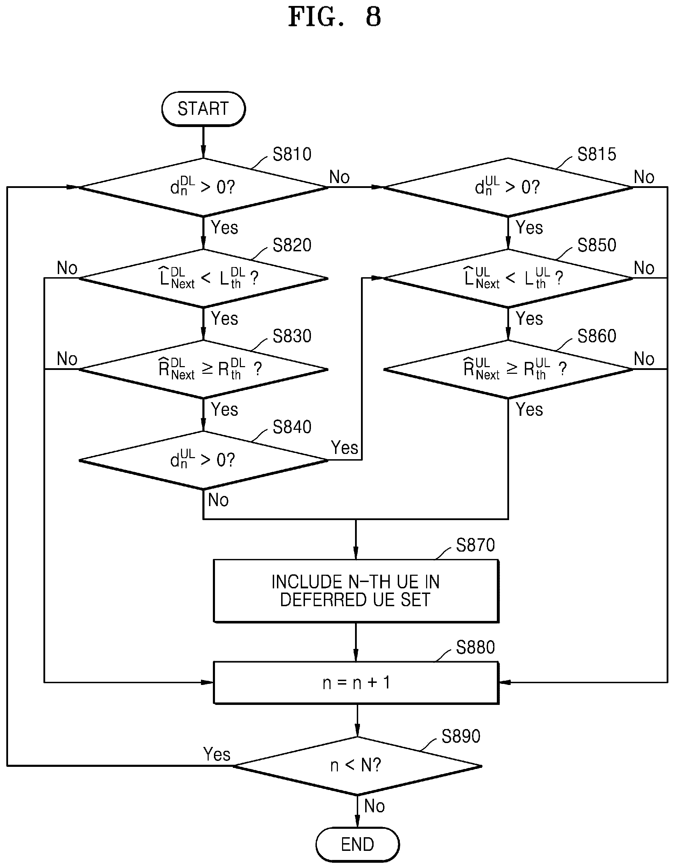

Meanwhile, the method of FIG. 5 may be a method, performed by the base station 100, of determining whether to include a single UE (second UE) connected to the base station 100 in a deferred UE set, and the same or similar operations may be performed on UEs connected to the base station 100. An operation, performed by the base station 100, of determining whether to include UEs connected to the base station 100 in a deferred UE set will be described in detail with reference to FIGS. 7 and 8.

Meanwhile, the first UE may be specified to describe a method of allocating a wireless resource in consideration of a cycle parameter and downlink data. The second UE may be a UE specified to describe a method of allocating a wireless resource in consideration of a cycle parameter, downlink data, and uplink data. Accordingly, the first UE and the second UE may not be different from each other.

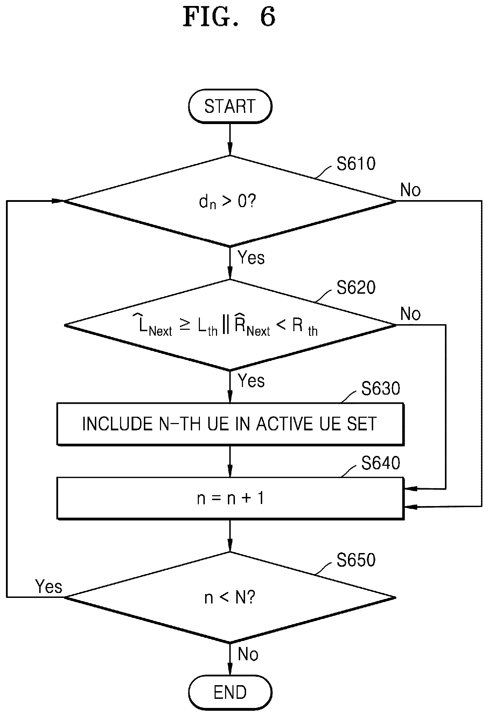

FIG. 6 is a flowchart illustrating an operation, performed by a base station, that generates an active UE set for each of UEs connected to the base station, according to an embodiment.

Referring to FIG. 6, an operation, performed by the base station 100 according to an embodiment, of generating an active UE set may include operations S610 to S650. In an embodiment, operations S610 to S650 may be performed by at least one processor included in the base station 100. The operation, performed by the base station 100, of generating an active UE set is not limited to that shown in FIG. 6, and may further include an operation not shown in FIG. 6. FIG. 6 is a flowchart for performing the method or operation of FIGS. 2 and 3 on at least one UE connected to the base station 100. Meanwhile, the flowchart of FIG. 6 may be a method of generating an active UE set for downlink or a method of generating an active UE set for uplink.

Meanwhile, the method of generating an active UE set for downlink and the method of generating an active UE set for uplink may be performed independently.

Before operations S610 to S650 are performed, n=0 may be set. Also, N represents the number of UEs connected to the base station 100.

In operation S610, the base station 100 may identify whether $d_n$ is greater than 0. In an embodiment, the base station 100 may obtain downlink data, and according to downlink data for a n-th UE having a value that is greater than 0, the base station 100 may perform operation S620. According to $d_n^{DL}$ having a value of 0, operation S640 may be performed.

In an embodiment, the base station 100 may obtain uplink data, and according to uplink data $d_n^{UL}$ for a n-th UE having a value that is greater than 0, the base station 100 may perform operation S620. According to $d_n^{UL}$ having a value of 0, operation S640 may be performed.

In operation S620, the base station 100 may identify whether expected latency $\hat{L}_{Next}(\hat{L}_{Next}^{DL}, \hat{L}_{Next}^{UL})$ for the n-th UE is greater than or equal to threshold latency $L_{th}(L_{th}^{DL}, L_{th}^{UL})$ for the n-th UE or whether expected UPT $\hat{R}_{Next}(\hat{R}_{Next}^{DL}, \hat{R}_{Next}^{UL})$ for the n-th UE is less than threshold UPT $R_{th}(R_{th}^{DL}, R_{th}^{UL})$ for the n-th UE.

In an embodiment, according to $\hat{L}_{Next}(\hat{L}_{Next}^{DL}, \hat{L}_{Next}^{UL})$ being greater than or equal to $L_{th}(L_{th}^{DL}, L_{th}^{UL})$, the base station 100 may perform operation S630. In an embodiment, according to $\hat{R}_{Next}(\hat{R}_{Next}^{DL}, \hat{R}_{Next}^{UL})$ being less than $R_{th}(R_{th}^{DL}, R_{th}^{UL})$, the base station 100 may perform operation S630. In an embodiment, according to $\hat{L}_{Next}(\hat{L}_{Next}^{DL}, \hat{L}_{Next}^{UL})$ being less than and $\hat{R}_{Next}(\hat{R}_{Next}^{DL}, \hat{R}_{Next}^{UL})$ being greater than or equal to $R_{th}(R_{th}^{DL}, R_{th}^{UL})$, the base station 100 may perform operation S640.

In operation S630, the base station 100 may include the n-th UE in an active UE set. In an embodiment, according to satisfaction of a preset condition related to the n-th UE, the base station 100 may include the n-th UE in the active UE set.

In operation S640, the base station 100 may update n to a value of n+1. For example, when n has a value of 2 before operation S640 is performed, n may be updated to 3.

In operation S650, the base station 100 may identify whether n is smaller than N. In an embodiment, the base station 100 may identify whether a value of n is smaller than N which is the number of at least one UE connected to the base station 100, and according to n being smaller than N, the base station 100 may perform operation S610 to repeatedly perform the above-described operation on another UE connected to the base station 100. According to n being greater than or equal to N, the base station 100 may stop repeatedly performing the above-described operation.

In an embodiment, the above-described operation may be performed on N UEs connected to the base station 100.

In an embodiment, the base station 100 may perform operations S610 to S650 to generate an active UE set for downlink. Also, the base station 100 may perform operations S610 to S650 to generate an active UE set for uplink.

FIG. 7 is a flowchart illustrating an operation, performed by a base station, of generating an active UE set by using a deferred UE set for each of UEs connected to the base station, according to an embodiment.

Referring to FIG. 7, an operation, performed by the base station 100 according to an embodiment, of generating an active UE set may include operations S710 to S750. In an embodiment, operations S710 to S750 may be performed by at least one processor included in the base station 100. The operation, performed by the base station 100, of generating an active UE set is not limited to that shown in FIG. 7, and may further include an operation not shown in FIG. 7. FIG. 7 is a flowchart for performing the method or operation of FIGS. 4 and 5 on at least one UE connected to the base station 100. Meanwhile, the flowchart of FIG. 7 may be a method of generating an active UE set for downlink or a method of generating an active UE set for uplink.

Meanwhile, the method of generating an active UE set for downlink and the method of generating an active UE set for uplink may be performed independently.

Before operations S710 to S750 are performed, n=0 may be set. Also, N represents the number of UEs connected to the base station 100.

In operation S710, the base station 100 may identify whether $d_n$ is greater than 0. In an embodiment, the base station 100 may obtain downlink data, and according to downlink data $d_n^{DL}$ for a n-th UE having a value that is greater than 0, the base station 100 may perform operation S720. According to $d_n^{DL}$ having a value of 0, operation S740 may be performed.

In an embodiment, the base station 100 may obtain uplink data, and according to uplink data $d_n^{UL}$ for a n-th UE having a value that is greater than 0, the base station 100 may perform operation S720. According to $d_n^{UL}$ having a value of 0, operation S740 may be performed.

In operation S720, the base station 100 may identify whether the n-th UE is included in a deferred UE set. In an embodiment, in response to the n-th UE being included in the deferred UE set, the base station 100 may perform operation S740. In an embodiment, in response to the n-th UE being not included in the deferred UE set, the base station 100 may perform operation S730. Meanwhile, a detailed flowchart for generating a deferred UE set will be described with reference to FIG. 8.

In operation S730, the base station 100 may include the n-th UE in an active UE set. In an embodiment, according to satisfaction of a specific condition related to the n-th UE, the base station 100 may include the n-th UE in the active UE set.

In operation S740, the base station 100 may update n to a value of n+1. For example, when n has a value of 2 before operation S740 is performed, n may be updated to 3.

In operation S750, the base station 100 may identify whether n is smaller than N. In an embodiment, the base station 100 may identify whether a value of n is smaller than N which is the number of at least one UE connected to the base station 100, and according to n being smaller than N, the base station 100 may perform operation S710 to repeatedly perform the above-described operation on another UE connected to the base station 100. According to n being greater than or equal to N, the base station 100 may stop repeatedly performing the above-described operation.

In an embodiment, the above-described operation may be performed on N UEs connected to the base station 100.

In an embodiment, the base station 100 may perform operations S710 to S750 to generate an active UE set for downlink. Also, the base station 100 may perform operations S710 to S750 to generate an active UE set for uplink.

FIG. 8 is a flowchart illustrating an operation, performed by a base station, of generating a deferred UE set for each of UEs connected to the base station, according to an embodiment.

Referring to FIG. 8, the operation, performed by the base station 100 according to an embodiment, of generating a deferred UE set may include operations S810 to S890. In an embodiment, operations S810 to S890 may be executed by at least one processor included in the base station 100. The operation, performed by the base station 100, of generating a deferred UE set is not limited to that shown in FIG. 8, and may further include an operation not shown in FIG. 8. Meanwhile, a method of generating a deferred UE set is not limited to the order of operations disclosed in FIG. 8. FIG. 8 is a flowchart for performing the method or operation of generating a deferred UE set as disclosed in FIG. 7 on at least one UE connected to the base station 100.

Meanwhile, although a method of generating an active UE set for downlink and a method of generating an active UE set for uplink are performed independently, a deferred UE set generated through the flowchart of FIG. 8 may be used in an operation of generating an active UE set for downlink or an operation of generating an active UE set for uplink.

Before operations S810 to S890 are performed, n=0 may be set. Also, N represents the number of UEs connected to the base station 100.

In operation S810, the base station 100 may identify whether $d_n^{DL}$ is greater than 0. In an embodiment, according to downlink data $d_n^{DL}$ for a n-th UE having a value that is greater than 0, the base station 100 may perform operation S820. In an embodiment, according to $d_n^{DL}$ having a value of 0, operation S815 may be performed.

In operation S815, the base station 100 may identify whether $d_n^{UL}$ is greater than 0. In an embodiment, according to uplink data $d_n^{UL}$ for the n-th UE having a value that is greater than 0, the base station 100 may perform operation S850. In an embodiment, according to $d_n^{UL}$ having a value of 0, operation S880 may be performed.

In operation S820, the base station 100 may identify whether $\widehat{L}_{Next}^{DL}$ is smaller than $L_{th}^{DL}$. In an embodiment, according to expected downlink latency $\widehat{L}_{Next}^{DL}$ for the n-th UE being less than threshold downlink latency $L_{th}^{DL}$, the base station 100 may perform operation S830. In an embodiment, according to the the expected downlink latency $\widehat{L}_{Next}^{DL}$ for the n-th UE being greater than or equal to the threshold downlink latency $L_{th}^{DL}$, the base station 100 may perform operation S880.

In operation S830, the base station 100 may identify whether $\widehat{R}_{Next}^{DL}$ is greater than or equal to $R_{th}^{DL}$. In an embodiment, according to expected down-

link UPT $\widehat{R}_{Next}^{DL}$ for the n-th UE being greater than or equal to threshold downlink UPT $R_{th}^{DL}$, the base station 100 may perform operation S840. In an embodiment, according to the expected downlink UPT $\widehat{R}_{Next}^{DL}$ for the n-th UE being less than the threshold downlink UPT $R_{th}^{DL}$, the base station 100 may perform operation S880.

In operation S840, the base station 100 may identify whether $d_n^{UL}$ is greater than 0. In an embodiment, according to uplink data $d_n^{UL}$ for the n-th UE having a value that is greater than 0, the base station 100 may perform operation S850. In an embodiment, according to $d_n^{UL}$ having a value of 0, operation S870 may be performed.

In operation S850, the base station 100 may identify whether $\widehat{L}_{Next}^{UL}$ is smaller than $L_{th}^{UL}$. In an embodiment, according to expected uplink latency $\widehat{L}_{Next}^{UL}$ for the n-th UE being less than threshold uplink latency $L_{th}^{UL}$ the base station 100 may perform operation S860. In an embodiment, according to the expected uplink latency $\widehat{L}_{Next}^{UL}$ for the n-th UE being greater than or equal to the threshold uplink latency $L_{th}^{UL}$, the base station 100 may perform operation S880.

In operation S860, the base station 100 may identify whether $\widehat{R}_{Next}^{UL}$ is greater than or equal to $R_{th}^{UL}$. In an embodiment, according to the expected uplink UPT $\widehat{R}_{Next}^{UL}$ for the n-th UE being greater than or equal to the threshold uplink UPT $R_{th}^{UL}$, the base station 100 may perform operation S870. In an embodiment, according to the expected uplink UPT $\widehat{R}_{Next}^{UL}$ for the n-th UE being less than the threshold uplink UPT $R_{th}^{UL}$, the base station 100 may perform operation S880.

In operation S870, the base station 100 may include the n-th UE in a deferred UE set. In an embodiment, according to the n-th UE satisfying a preset condition, the base station 100 may include the n-th UE in the deferred UE set. In an embodiment, the preset condition may be a condition that, in response to $d_n^{DL}$ being greater than 0, $\widehat{L}_{Next}^{DL}$ for the n-th UE is smaller than $L_{th}^{DL}$ and $\widehat{R}_{Next}^{DL}$ for the n-th UE is greater than or equal to $R_{th}^{DL}$. In an embodiment, the preset condition may be a condition that, in response to $d_n^{UL}$ being greater than 0, $\widehat{L}_{Next}^{UL}$ for the n-th UE is smaller than $L_{th}^{UL}$ and $\widehat{R}_{Next}^{UL}$ for the n-th UE is greater than or equal to $R_{th}^{UL}$.

In operation S880, the base station 100 may update n to a value of n+1. For example, when n has a value of 5 before operation S880 is performed, n may be updated to 6.

In operation S890, the base station 100 may identify whether n is smaller than N. In an embodiment, the base station 100 may identify whether a value of n is smaller than N which is the number of at least one UE connected to the base station 100, and according to n being smaller than N, the base station 100 may perform operation S810 to repeatedly perform the above-described operation on another UE connected to the base station 100. According to n being greater than or equal to N, the base station 100 may stop repeatedly performing the above-described operation.

In an embodiment, in the same way as described above, the above-described operation may be performed on N UEs connected to the base station 100.

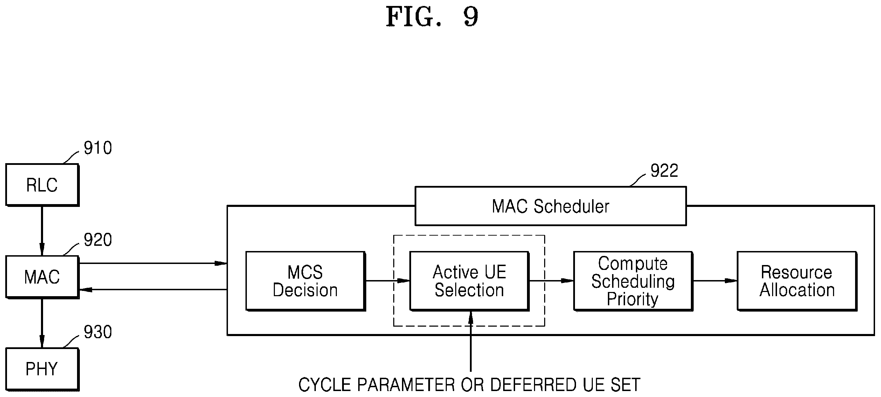

FIG. 9 shows layers of a base station according to an embodiment.

Referring to FIG. 9, the base station 100 may include a physical (PHY) layer 910, a medium access control (MAC) layer 920, and a radio link control (RLC) layer 930. In an embodiment, the physical layer 910 may be a layer that is in charge of direct data transmission/reception between the base station 100 and at least one UE, and the radio link control layer 930 may be a layer for supporting reliable transmission of data.

In an embodiment, at least one UE may report channel state information as a channel quality indicator (CQI) to the base station 100. The base station 100 may obtain channel state information periodically at designated time intervals. For example, the designated time interval may be a time for one symbol, slot, subframe, half frame, frame, etc. In an embodiment, the channel state information may be information generated by at least one UE and may be a result of quality measurement on reception of a reference signal transmitted from the base station 100. In an embodiment, the channel state information may include at least one of pre-coding matrix indicator (PMI), rank indicator (RI), or channel quality indicator (CQI).

In an embodiment, the channel state information obtained from at least one UE may be transferred from the physical layer 910 to the medium access control layer 920. In an embodiment, a modulation and coding scheme (MCS) index may be set based on channel state information indicating a channel state for each of at least one UE. In an embodiment, a buffer occupancy rate obtained from at least one UE may be transferred from the radio link control layer 930 to the medium access control layer 920.

In an embodiment, the medium access control layer 920 may schedule packets obtained from the at least one UE, by using the channel state information obtained from the physical layer 910 and the buffer occupancy rate obtained from the radio link control layer 930. In an embodiment, the medium access control layer 920 may allocate a resource block based on a scheduling priority of the at least one UE (e.g., UEs included in an active UE set), a MCS level (MCS index), and a buffer traffic amount.

The medium access control layer 920 may operate as a MAC scheduler 922 in order to schedule the packets obtained from the at least one UE. In an embodiment, the MAC scheduler 922 may indicate a hardware component that performs a scheduling operation in the medium access control layer 920. Additionally or alternatively, the MAC scheduler 922 may indicate a software component that performs a scheduling operation in the medium access control layer 920. For example, the MAC scheduler 922 may include at least one algorithm that sets a scheduling priority and allocates a resource.

In an embodiment, for resource allocation, the MAC scheduler 922 may select at least active UE from among UEs connected to the base station 100. For example, the MAC scheduler 922 may generate an active UE set by determining whether to include UEs connected to the base station 100 in the active UE set, based on a cycle parameter and a buffer occupancy rate for each UE, obtained from the radio link control layer 930.

In an embodiment, the MAC scheduler 922 may identify a buffer occupancy rate for each UE, such as downlink data or uplink data, and determine whether to include the UE in the active UE set according to whether a condition related to a cycle parameter is satisfied. More specifically, the MAC scheduler 922 may determine whether to include each UE in the active UE set, based on latency for downlink or a condition related to UPT, or latency for uplink or a condition related to UPT. A method of generating an active UE set by using a cycle parameter and a buffer occupancy rate for each UE corresponds to FIGS. 2, 3, and 6, and therefore, overlapping descriptions will be omitted.

In an embodiment, the MAC scheduler 922 may generate a deferred UE set by identifying a buffer occupancy rate for each UE, such as downlink data or uplink data, and determining whether to include the UE in the deferred UE set according to whether a condition related to a cycle parameter is satisfied. Also, the MAC scheduler 922 may generate an active UE set based on the generated deferred UE set. More specifically, the MAC scheduler 922 may determine whether to include each UE in the deferred UE set, based on latency for downlink or a condition related to UPT, or latency for uplink or a condition related to UPT. A method of generating a deferred UE set by using a cycle parameter and a buffer occupancy rate for each UE corresponds to FIGS. 4, 5, 7, and 8, and therefore, overlapping descriptions will be omitted.

In an embodiment, the MAC scheduler 922 may calculate scheduling priorities for a plurality of active UEs. To this end, the MAC scheduler 922 may calculate a scheduling metric for the active UEs based on an arbitrary scheduling algorithm or an AI model. For example, the MAC scheduler 922 may use a scheduling algorithm (or mechanism) or an AI model configured to optimize resource efficiency. The MAC scheduler 922 may arrange the active UEs based on the calculated scheduling metric. That is, the MAC scheduler 922 may set a scheduling priority based on a scheduling metric value of each UE.

The MAC scheduler 922 may allocate one or more valid resource blocks included in one time slot to at least one active UE. In an embodiment, the MAC scheduler 922 may allocate resources based on the scheduling priorities of the plurality of active UEs. For example, the MAC scheduler 922 may allocate resource blocks to the respective UEs, based on a scheduling priority of each UE, together with a required resource block of the UE, derived from a MCS level and a traffic amount of a buffer.

More specifically, in the case in which an amount of required resource blocks of a UE with a highest priority exceeds an amount of valid resource blocks, the MAC scheduler 922 may allocate all the valid resource blocks to the UE with the highest priority. In contrast, in the case in which an amount of required resource blocks of a UE with a highest priority does not exceed an amount of valid resource blocks, the MAC scheduler 922 may allocate resource blocks corresponding to the amount of required resource blocks to the UE with the highest priority. A UE with a lower priority may have an opportunity to be allocated the remaining resource blocks by the above-described method. This allocation process may continue until no valid resource blocks remain in the corresponding time slot.

The above-described allocation process may be an example of allocating a resource by using an active UE set generated based on a cycle parameter or a deferred UE set, although not limited thereto.

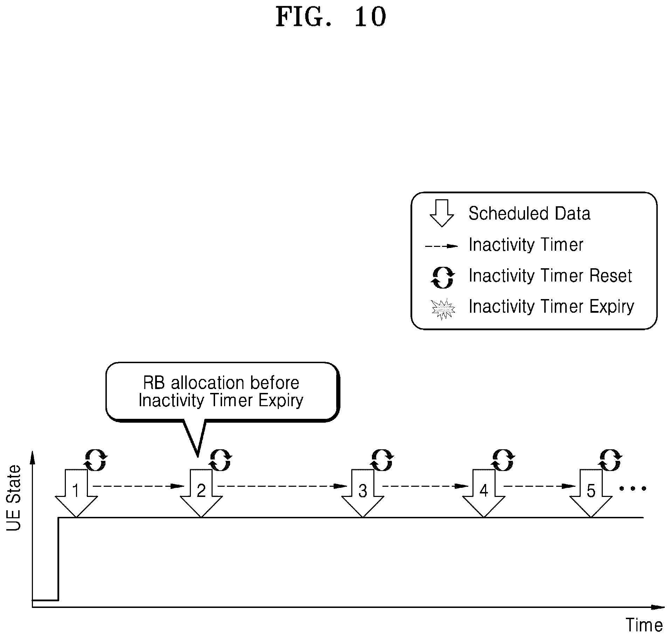

FIG. 10 shows an example of a conventional wireless communication system according to an embodiment.

A case in which a small amount of data is continuously generated at time intervals each of which is shorter than a time of an inactivity timer in the conventional wireless communication system is shown in FIG. 10.

In an embodiment, the base station 100 and a UE may perform wireless communication by using a C-DRX function. The C-DRX function is a technology that reduces battery usage by periodically switching a communication function of a UE to a low power mode. The base station 100 and the UE may share information related to the C-DRX function and reduce battery usage by reducing power consumption of a transceiver of the UE when there is no data transmission/reception for a specific UE.

In an embodiment, while the UE performs the C-DRX function, the UE may consider an inactivity timer related to a time from when the UE is finally allocated to a resource to when switching to the low power mode occurs. Also, when the UE is finally allocated to a resource, the inactivity timer may be reset. In an embodiment, when there is no data transmission/reception for a time set in advance in the inactivity timer, the UE may be switched to the low power mode. In an embodiment, when transmission/reception of a small amount of data is identified within a shorter time interval than the time set in advance in the inactivity timer, the UE may continue to consume battery power without being switched to the low power mode even though the amount of data to be transmitted/received is not large.

In an embodiment, in order to prevent a case in which the UE fails to be switched to the low power mode when an amount of data to be transmitted/received is not large, a method of allocating a wireless resource, according to the present disclosure, may be used.

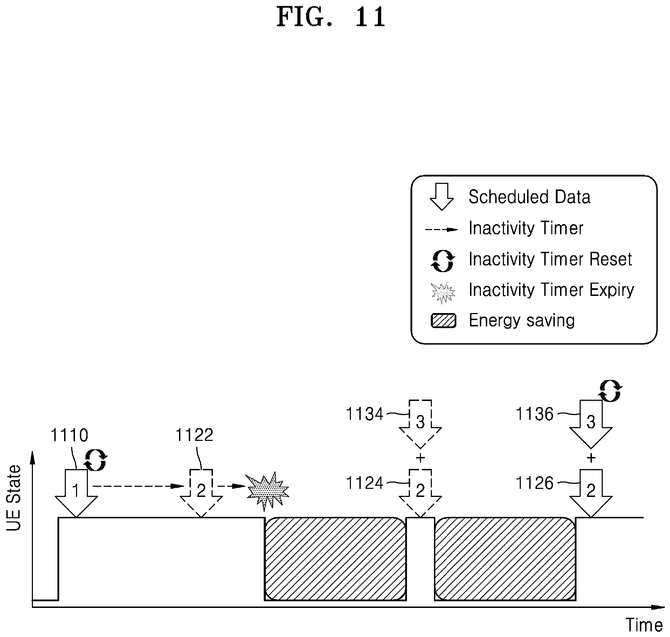

FIG. 11 shows an example of a wireless communication system of the present disclosure, according to an embodiment.

An example of a wireless communication system in which a UE receives data from the base station 100 will be described with reference to FIG. 11. In an embodiment, the example of FIG. 11 may be executed by the wireless resource allocation method described with reference to FIGS. 1 to 9. In an embodiment, an operation in which a UE is allocated to a wireless resource and receives data is not limited to that shown in FIG. 11, and may be performed by using a series of methods not shown in FIG. 11. Meanwhile, for convenience of description, it is described that the UE of FIG. 11 uses a cycle related to the C-DRX function. However, the present disclosure is not limited thereto.

In an embodiment, the base station 100 may generate an active UE set by considering UEs having data to be transmitted, and set scheduling priorities of the UEs included in the active UE set. The base station 100 may allocate a wireless resource to at least one UE included in the active UE set, in consideration of the set scheduling priorities. Also, the base station 100 may transmit data to the UE allocated the wireless resource.

Meanwhile, for convenience of description, the term 'receiving data' is used to collectively refer to a specific UE receiving data by being allocated a wireless resource from the base station 100.

In an embodiment, the UE may receive first data 1110 from the base station 100. In an embodiment, in a communication system that does not consider a cycle parameter or a deferred UE set, the UE may receive second data 1122 at a time at which the second data 1122 is indicated. In a communication system that considers a cycle parameter and a deferred UE set, the UE may not receive the second data 1122 at the time at which the second data 1122 is indicated, when a specific condition is satisfied. The base station 100 may delay allocating a wireless resource to the UE to which the second data 1122 needs to be transmitted and transmitting data to the UE.

In an embodiment, the specific condition may be a condition related to the operation of generating the active UE set or the operation of generating the deferred UE set in the method of allocating the wireless resource, as described with reference to FIGS. 1 to 9. Descriptions overlapping with those described with reference to FIGS. 1 to 9 will be omitted.

In an embodiment, when the UE fails to receive the second data 1122, the UE may determine that no data is received for the time set in advance in the inactivity timer and be switched to the low power mode.

In an embodiment, the UE may check whether a resource has been allocated within a DRX cycle after the UE receives the first data 1110. In an embodiment, the UE may check whether a resource has been allocated by consuming more power than in the low power mode, within a DRX cycle. In this case, in a communication system that does not consider a cycle parameter or a deferred UE set, the UE may receive second data 1124 or third data 1134. In a communication system that considers a cycle parameter or a deferred UE set, the UE may not receive the second data 1124 or the third data 1134 at a time at which the second data 1124 or the third data 1134 is indicated, when a specific condition is satisfied. The base station 100 may delay allocating a wireless resource for transmitting the second data 1124 or the third data 1134 and transmitting data.

In an embodiment, in a next DRX cycle after the time at which the second data 1124 or the third data 1126 is indicated, the base station 100 may determine to include the UE of FIG. 11 in an active UE set according to a specific condition and allocate a wireless resource to the UE of FIG. 11, and in this case, the UE may receive second data 1134 and third data 1136 which the base station 100 has delayed transmitting.

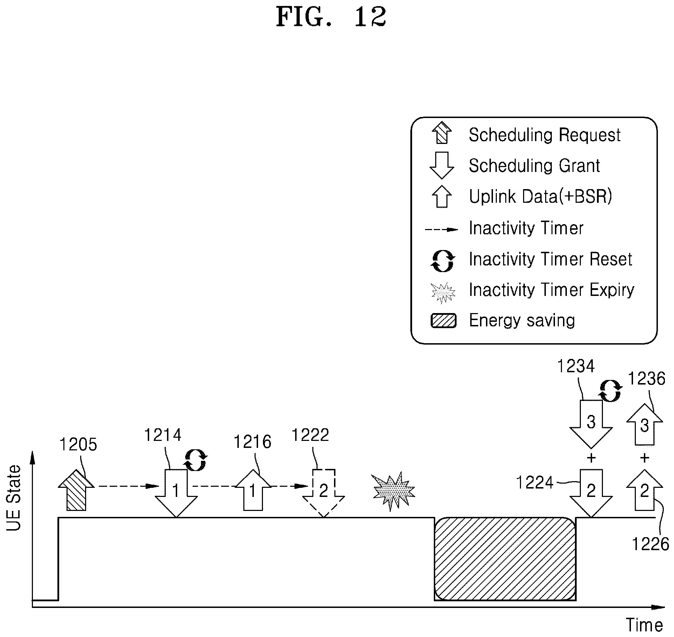

FIG. 12 shows an example of a wireless communication system of the present disclosure, according to an embodiment.

An example of a wireless communication system in which a UE transmits data to the base station 100 will be described with reference to FIG. 12. In an embodiment, the example of FIG. 12 may be executed by the method of allocating the wireless resource as described with reference to FIGS. 1 to 9. In an embodiment, an operation in which a UE is allocated a wireless resource and transmits data to the base station 100 is not limited to that shown in FIG. 12, and may be performed by a series of methods not shown in FIG. 12. Meanwhile, for convenience of description, it is described that the UE of FIG. 12 uses a cycle related to the C-DRX function. However, the present disclosure is not limited thereto.

In an embodiment, the base station 100 may generate an active UE set by considering UEs from which data will be received, and set scheduling priorities between the UEs included in the active UE set. The base station 100 may allocate a wireless resource to at least one UE included in the active UE set, in consideration of the set scheduling priorities. Also, the base station 100 may receive data from the UE which has been allocated the wireless resource.

Meanwhile, for convenience of description, the term 'transmitting data' is used to collectively refer to a specific UE transmitting data to the base station 100 by being allocated a wireless resource from the base station 100.

In an embodiment, the UE may transmit a SR. A SR may be a signal used to notify that a UE has data to transmit to the base station 100. A SR may be a signal indicating whether or not a UE has data to transmit to the base station 100. The base station 100 may transmit a first grant signal 1214 indicating a scheduling grant to the UE that has transmitted the scheduling request, in response to the SR. The UE may receive the first grant signal 1214 from the base station 100. Also, the UE may transmit first data 1216 which is uplink data including a BSR, to the base station 100, in response to reception of the first grant signal 1214.

In an embodiment, in a communication system which does not consider a cycle parameter or a deferred UE set, the base station 100 may transmit a second grant signal 1222 indicating a scheduling grant to the UE, based on the received BSR. The UE may transmit the first data 1216 and receive the second grant signal 1222 within a preset time.

In an embodiment, in a communication system that considers a cycle parameter or a deferred UE set, the UE may not receive the second grant signal 1222 at a time at which the second grant signal 1222 is indicated, according to satisfaction of a specific condition. The base station 100 may delay allocating a wireless resource to the UE to which the base station 100 will transmit the second grant signal 1222.

In an embodiment, the specific condition may be a condition related to the operation of generating the active UE set or the operation of generating the deferred UE set in the method of allocating the wireless resource as described with reference to FIGS. 1 to 9. Descriptions overlapping with those described with reference to FIGS. 1 to 9 will be omitted.

In an embodiment, when the UE fails to receive the second grant signal 1222, the UE may be switched to the low power mode without transmitting data for a time set in advance in an inactivity timer.

In an embodiment, the UE may determine whether a resource has been allocated in a DRX cycle after transmitting the first data 1216. In the DRX cycle after the UE transmits the first data 1216, the base station 100 may determine to include the UE of FIG. 12 in the active UE set according to a specific condition and allocate a wireless resource to the UE of FIG. 12. In this case, the base station 100 may transmit a second grant signal 1224 and a third grant signal 1234 indicating a scheduling grant to the UE. The UE may transmit uplink data to the base station 100 within a preset time in response to reception of the second grant signal 1224 or the third grant signal 1234. That is, the UE may transmit second data 1226 and third data 1236 which are uplink data to the base station 100.

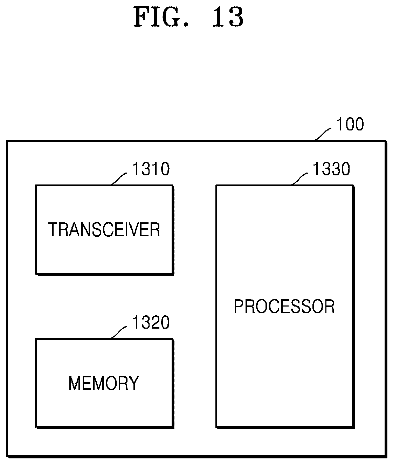

FIG. 13 is a block diagram of a base station for allocating a wireless resource, according to an embodiment.

Referring to FIG. 13, the base station 100 may include a transceiver 1310, memory 1320, and at least one processor 1330 (hereinafter, a processor). In an embodiment, the memory 1320 may include a cycle parameter obtaining module, a data obtaining module, an active UE generating module, and a wireless resource allocating module, which are not shown in FIG. 13. In various embodiments, the base station 100 is not limited to components shown in FIG. 13, and the base station 100 may omit at least one of the components shown in FIG. 13 or further include a component not shown in FIG. 13.

In an embodiment, the transceiver 1310 may perform data communication with UEs connected to the base station 100 according to control by the processor 1330. The transceiver 1310 may include a communication circuit capable of performing data communication with the UEs connected to the base station 100 by using at least one of data communication methods.

In an embodiment, the processor may be electrically connected to the components included in the base station 100 to execute calculations or data processing related to control and/or communication of the components included in the base station 100. In an embodiment, the processor may load a request, a command, or data received from at least one of the other components in the memory, process the request, command, or data, and store result data in the memory. According to various embodiments, the processor may include at least one of a central processing unit (CPU), an application processor (AP), a graphic processing unit (GPU), or a neural processing unit (NPU).

The memory may be electrically connected to the processor , and store one or more modules, programs, instructions, or data related to operations of the components included in the base station 100. The memory may include at least one type of storage medium among a flash memory type, a hard disk type, a multimedia card micro type, card type memory (for example, Secure Digital (SD) or eXtreme Digital (XD) memory), Random Access Memory (RAM), Static Random Access Memory (SRAM), Read-Only Memory (ROM), Electrically Erasable Programmable Read-Only Memory (EEPROM), and Programmable Read-Only Memory (PROM), magnetic memory, a magnetic disk, or an optical disk.

In an embodiment, at least one of the cycle parameter obtaining module, the data obtaining module, the active UE set generating module, or the wireless resource allocating module of the memory 1320 may be implemented as a separate hardware module, or stored as a software module in the memory 1320. Also, at least one of the cycle parameter obtaining module, the data obtaining module, the active UE set generating module, or the wireless resource allocating module may operate by being executed by the processor 1330.

In an embodiment, the cycle parameter obtaining module may be executed by the processor to obtain a parameter related to a cycle at which it is identified whether there is data that is transmitted/received between the base station 100 and the UE. Detailed operations related to the cycle parameter obtaining module have been described in detail with reference to the previous drawings, and therefore, overlapping descriptions will be omitted.

In an embodiment, the data obtaining module may be executed by the processor to check whether there is downlink data or uplink data for a specific UE. Detailed operations related to the data obtaining module have been described in detail with reference to the previous drawings, and therefore, overlapping descriptions will be omitted.

In an embodiment, the active UE set generating module may be executed by the processor to determine whether to include UEs connected to the base station 100 in an active UE based on whether the UEs satisfy a specific condition. Detailed operations related to the active UE set generating module have been described in detail with reference to the previous drawings, and therefore, overlapping descriptions will be omitted.

In an embodiment, the wireless resource allocating module may be executed by the processor to allocate a wireless resource to at least one UE included in the active UE set. Detailed operations related to the wireless resource allocating module have been described in detail with reference to the previous drawings, and therefore, overlapping descriptions will be omitted.

Embodiments for an arbitrary one of FIGS. 1 to 13 described above may also be applied to the other drawings, and overlapping content may be omitted. Also, embodiments described with reference to FIGS. 1 to 13 may be combined with each other.

In an embodiment, the present disclosure may be implemented in various ways including a method, a system, an apparatus, or a computer program stored in a computer-readable storage medium.

In an embodiment, a method, performed by a base station 100, of allocating a wireless resource may include obtaining a cycle parameter indicating a cycle which the base station 100 uses to transmit/receive data to/from at least one User Equipment (UE) (operation S210). In an embodiment, the method, performed by the base station 100, of allocating a wireless resource may include obtaining downlink data indicating an amount of data in a downlink buffer that is to be transmitted to the at least one UE (operation S220). In an embodiment, the method, performed by the base station 100, of allocating, based on the obtained cycle parameter and the downlink data, a wireless resource may include generating an active UE set including a UE that needs to be allocated a wireless resource (operation S230). In an embodiment, the method, performed by the base station 100, of allocating a wireless resource may include allocating a wireless resource to at least one active UE included in the generated active UE set (operation S240).

In an embodiment, the cycle parameter may include a DRX cycle used to perform a C-DRX function on the at least one UE.

In an embodiment, the method, performed by the base station 100, of allocating a wireless resource may include identifying, based on the obtained downlink data, downlink data for a first UE included in the at least one UE (operation S310). In an embodiment, the method, performed by the base station 100, of allocating, based on the identifying of the downlink data for the first UE, a wireless resource may include comparing expected downlink latency for the first UE to threshold downlink latency for the first UE (operation S320). In an embodiment, the method, performed by the base station 100, of allocating, based on the identifying of the downlink data for the first UE, a wireless resource may include comparing expected downlink UPT for the first UE to threshold downlink UPT for the first UE (operation S330). In an embodiment, the method, performed by the base station 100, of allocating, based on the compared result, a wireless resource may include determining whether to include the first UE in the active UE set (operation S340).

In an embodiment, the threshold downlink UPT for the first UE and the threshold downlink latency for the first UE may be set based on a QCI of a logical channel for the first UE.

In an embodiment, the method, performed by the base station 100, of allocating a wireless resource may include, in response to the expected downlink latency for the first UE being less than the threshold downlink latency for the first UE and the expected downlink UPT for the first UE being greater than or equal to the threshold downlink UPT for the first UE, determining not to include the first UE in the active UE set. In an embodiment, the method, performed by the base station 100, of allocating a wireless resource may include, in response to the expected downlink latency for the first UE being greater than or equal to the threshold downlink latency for the first UE and the expected downlink UPT for the first UE being less than the threshold downlink UPT for the first UE, determining to include the first UE in the active UE set.

In an embodiment, the method, performed by the base station 100, of allocating a wireless resource may include obtaining uplink data indicating an amount of data in an uplink buffer that needs to be received from the at least one UE (operation S430). In an embodiment, the method, performed by the base station 100, of allocating a wireless resource may include generating, based on at least one of the obtained cycle parameter, the downlink data, or the uplink data, a deferred UE set including a UE deferred from being allocated a wireless resource by the base station 100 (operation S440). In an embodiment, the method, performed by the base station 100, of allocating, based on the generated deferred UE set, a wireless resource may include generating the active UE set (operation S450).

In an embodiment, the method, performed by the base station 100, of allocating, based on the obtained downlink data, a wireless resource may include identifying downlink data for a second UE included in the at least one UE (operation S510).

In an embodiment, the method, performed by the base station 100, of allocating, based on the obtained uplink data, a wireless resource may include identifying uplink data for the second UE (operation S520). In an embodiment, the method, performed by the base station 100, of allocating, based on the identifying of the downlink data for the second UE, a wireless resource may include comparing expected downlink latency for the second UE to threshold downlink latency for the second UE (operation S530). In an embodiment, the method, performed by the base station 100, of allocating, based on the identifying of the downlink data for the second UE, a wireless resource may include comparing expected downlink UPT for the second UE to threshold downlink UPT for the second UE (operation S540). In an embodiment, the method, performed by the base station 100, of allocating a wireless resource may include comparing, based on the identifying of the uplink data for the second UE, expected uplink latency for the second UE to threshold uplink latency for the second UE (operation S550). In an embodiment, the method, performed by the base station 100, of allocating, based on the identifying of the uplink data for the second UE, a wireless resource may include comparing expected uplink UPT for the second UE to threshold uplink UPT for the second UE (operation S560). In an embodiment, the method, performed by the base station 100, of allocating, based on the compared result, a wireless resource may include determining whether to include the second UE in the deferred UE set (operation S570).

In an embodiment, the threshold downlink latency for the second UE, the threshold downlink UPT for the second UE, the threshold uplink latency for the second UE, and the threshold uplink UPT for the second UE may be set based on a logical channel for the second UE or a QCI of a logical channel group of the second UE.

In an embodiment, the method, performed by the base station 100, of allocating a wireless resource may include, in response to an arbitrary UE included in the at least one UE being included in the deferred UE set, determining not to include the arbitrary UE in the active UE set.

In an embodiment, the uplink data may be obtained based on a BSR reported from the at least one UE.

In an embodiment, a base station 100 for allocating a wireless resource may include a transceiver 1310, memory 1320 storing one or more instructions, and at least one processor 1330 configured to execute the one or more instructions stored in the memory. In an embodiment, the at least one processor 1330 may obtain a cycle parameter indicating a cycle at which the base station 100 uses to transmit/receive data to/from at least UE. In an embodiment, the at least one processor 1330 may obtain downlink data indicating an amount of data in a downlink buffer that is to be transmitted to the at least one UE. In an embodiment, the at least one processor 1330 may generate, based on the obtained cycle parameter and the downlink data, an active UE set including a UE that needs to be allocated a wireless resource. In an embodiment, the at least one processor 1330 may allocate a wireless resource to at least one active UE included in the generated active UE set.

In an embodiment, the cycle parameter may include a DRX cycle used to perform a C-DRX function on the at least one UE.

In an embodiment, the at least one processor 1330 may identify, based on the obtained downlink data, downlink data for the first UE included in the at least one UE. In an embodiment, the at least one processor 1330 may compare, based on the identifying of the downlink data for the first UE, expected downlink latency for the first UE to threshold downlink latency for the first UE. In an embodiment, the at least one processor 1330 may compare, based on the identifying of the downlink data for the first UE, expected downlink UPT for the first UE to threshold downlink UPT for the first UE. In an embodiment, the at least one processor 1330 may determine, based on the compared result, whether to include the first UE in the active UE set.

In an embodiment, the threshold downlink UPT for the first UE and the threshold downlink latency for the first UE may be set based on a QCI of a logical channel for the first UE.

In an embodiment, in response to the expected downlink latency for the first UE being less than the threshold downlink latency for the first UE and the expected downlink UPT for the first UE being greater than or equal to the threshold downlink UPT for the first UE, the at least one processor 1330 may determine not to include the first UE in the active UE set. In an embodiment, in response to the expected downlink latency for the first UE being greater than or equal to the threshold downlink latency for the first UE and the expected downlink UPT for the first UE being less than the threshold downlink UPT for the first UE, the at least one processor 1330 may determine to include the first UE in the active UE set.

In an embodiment, the at least one processor 1330 may obtain uplink data indicating an amount of data in an uplink buffer that needs to be received from the at least one UE. In an embodiment, the at least one processor 1330 may generate, based on at least one of the obtained cycle parameter, the downlink data, or the uplink data, a deferred UE set including a UE deferred from being allocated a wireless resource by the base station 100. In an embodiment, the at least one processor 1330 may generate the active UE set based on the generated deferred UE set.

In an embodiment, the at least one processor 1330 may identify downlink data for a second UE included in the at least one UE, based on the obtained downlink data. In an embodiment, the at least one processor 1330 may identify, based on the obtained uplink data, uplink data for the second UE. In an embodiment, the at least one processor 1330 may compare, based on the identifying of the downlink data for the second UE, expected downlink latency for the second UE to threshold downlink latency for the second UE. In an embodiment, the at least one processor 1330 may compare, based on the identifying of the downlink data for the second UE, expected downlink UPT for the second UE to threshold downlink UPT for the second UE. In an embodiment, the at least one processor 1330 may compare, based on the identifying of the uplink data for the second UE, expected uplink latency for the second UE to threshold uplink latency for the second UE. In an embodiment, the at least one processor 1330 may compare, based on the identifying of the uplink data for the second UE, expected uplink UPT for the second UE to threshold uplink UPT for the second UE. In an embodiment, the at least one processor 1330 may determine, based on the compared result, whether to include the second UE in the deferred UE set.

In an embodiment, the threshold downlink latency for the second UE, the threshold downlink UPT for the second UE, the threshold uplink latency for the second UE, and the threshold uplink UPT for the second UE may be set based on a logical channel for the second UE or a QCI of a logical channel group of the second UE.

In an embodiment, in response to an arbitrary UE included in the at least one UE being included in the deferred UE set, the at least one processor 1330 may determine not to include the arbitrary UE in the active UE set.

In an embodiment, the at least one processor 1330 may obtain the uplink data based on a BSR reported from the at least one UE.

Meanwhile, the embodiments of the present disclosure may be implemented in the form of a recording medium including an instruction that is executable by a computer, such as a program module that is executed by a computer. A computer-readable medium may be an arbitrary available medium which is able to be accessed by a computer, and may include a volatile or non-volatile medium and a separable or non-separable medium. Also, the computer-readable medium may include a computer storage medium and a communication medium. The computer storage medium may include volatile and non-volatile media and separable and non-separable media implemented by an arbitrary method or technology for storing information, such as computer-readable instructions, data structures, program modules, or other data. The communication medium may include other data of modulated data signals, such as computer-readable instructions, data structures, or program modules.

Also, the computer-readable storage medium may be provided in the form of a non-transitory storage medium. Herein, the term 'non-transitory storage medium' simply means that the storage medium is a tangible device, and does not include a signal (e.g., an electromagnetic wave), but this term does not differentiate between where data is semi-permanently stored in the storage medium and where the data is temporarily stored in the storage medium. For example, the 'non-transitory storage medium' may include a buffer in which data is temporarily stored.

According to an embodiment, the method according to various embodiments disclosed in the present document may be included in a computer program product and provided. The computer program product may be traded as a product between a seller and a purchaser. The computer program product may be distributed in the form of a machine-readable storage medium (e.g., compact disc read only memory (CD-ROM)), or be distributed (e.g., downloadable or uploadable) online via an application store or between two user devices (e.g., smart phones) directly. When distributed online, at least part of the computer program product (e.g., downloadable app) may be temporarily generated or at least temporarily stored in the machine-readable storage medium, such as a memory of the manufacturer's server, a server of the application store, or a relay server.

The aforementioned descriptions of the present disclosure are only for illustrative purposes, and it will be apparent that those of ordinary skill in the technical art to which the present disclosure belongs can make various modifications thereto without changing the technical spirit and essential features of the present disclosure. Thus, it should be understood that the embodiments described above are merely for illustrative purposes and not for limitation purposes in all aspects. For example, each component described as a single type may be implemented in a distributed type, and components described as distributed may be implemented in a combined form.

The scope of the present disclosure would be, rather than the detailed description, indicated by the claims, which will be described later, the spirit and scope of the claims, and all such modifications as would be derived from the equivalent concept intended to be included within the scope of the present disclosure.

**Claims**

1. A method, performed by a base station 100, of allocating a wireless resource comprising:

   obtaining a cycle parameter indicating a cycle which the base station 100 uses to transmit data to and receive data from at least one User Equipment (UE) (S210);
   obtaining downlink data indicating an amount of data in a downlink buffer that is to be transmitted to the at least one UE (S220);
   generating, based on the obtained cycle parameter and the obtained downlink data, an active UE set including a UE that needs to be allocated to the wireless resource (S230); and
   allocating the wireless resource to at least one active UE included in the generated active UE set (S240).

2. The method of claim 1, wherein the cycle parameter includes a Discontinuous Reception (DRX) cycle used to perform a Connected mode Discontinuous Reception (C-DRX) function on the at least one UE.

3. The method of any one of claims 1 and 2, wherein the generating of the active UE set comprises:

   identifying, based on the obtained downlink data, downlink data for a first UE included in the at least one UE (S310);
   comparing, based on the identifying of the downlink data for the first UE, expected downlink latency for the first UE with threshold downlink latency for the first UE (S320);
   comparing, based on the identifying of the downlink data for the first UE, expected downlink User-Perceived Throughput (UPT) for the first UE with threshold downlink UPT for the first UE (S330); and
   determining, based on the compared result, whether to include the first UE in the active UE set (S340).

4. The method of claim 3, wherein the threshold downlink UPT for the first UE and the threshold downlink latency for the first UE are set
   based on a Quality of Service Class Indicator (QCI) of a logical channel for the first UE.

5. The method of any one of claims 3 and 4, wherein the determining of whether to include the first UE in the active UE set comprises,

   in response to the expected downlink latency for the first UE being less than the threshold downlink latency for the first UE and the expected downlink UPT for the first UE being greater than or equal to the threshold downlink UPT for the first UE, determining not to include the first UE in the active UE set; or
   in response to the expected downlink latency for the first UE being greater than or equal to the threshold downlink latency for the first UE and the expected downlink UPT for the first UE being less than the threshold downlink UPT for the first UE, determining to include the first UE in the active UE set.

6. The method of any one of claims 1 and 2, further comprising obtaining uplink data indicating an amount of data in an uplink buffer that needs to be received from the at least one UE (S430),
   wherein the generating of the active UE set comprises:

   generating, based on at least one of the obtained cycle parameter, the downlink data, or the uplink data, a deferred UE set including a UE deferred from being allocated to the wireless resource by the base station 100 (S440); and
   generating the active UE set based on the generated deferred UE set (S450).

7. The method of claim 6, wherein the generating of the deferred UE set comprises:

   identifying, based on the obtained downlink data, downlink data for a second UE included in the at least one UE (S510);
   identifying, based on the obtained uplink data, uplink data for the second UE (S520);
   comparing, based on the identifying of the downlink data for the second UE, expected downlink latency for the second UE with threshold downlink latency for the second UE (S530);
   comparing, based on the identifying of the downlink data for the second UE, expected downlink UPT for the second UE with threshold downlink UPT for the second UE (S540);
   comparing, based on the identifying of the uplink data for the second UE, expected uplink latency for the second UE with threshold uplink latency for the second UE (S550);
   comparing, based on the identifying of the uplink data for the second UE, expected uplink UPT for the second UE with threshold uplink UPT for the second UE (S560); and

determining, based on the compared result, whether to include the second UE in the deferred UE set (S570).

8. The method of claim 7, wherein the threshold downlink latency for the second UE, the threshold downlink UPT for the second UE, the threshold uplink latency for the second UE, and the threshold uplink UPT for the second UE are set based on a logical channel for the second UE or a Quality of Service Class Indicator (QCI) of a logical channel group of the second UE.

9. The method of any one of claims 6 to 8, wherein the generating of the active UE set based on the deferred UE set comprises, based on an arbitrary UE included in the at least one UE being included in the deferred UE set, determining not to include the arbitrary UE in the active UE set.

10. The method of any one of claims 6 to 9, wherein the uplink data is obtained based on a Buffer Status Report (BSR) reported from the at least one UE.

11. A base station 100 for allocating a wireless resource, the base station 100 comprising:

a transceiver 1310;
memory 1320 storing one or more instructions; and
at least one processor 1330 configured to execute the one or more instructions stored in the memory,
wherein the at least one processor 1330 is configured to:

obtain a cycle parameter indicating a cycle at which the base station 100 uses to transmit/receive data to/from at least one User Equipment (UE),
obtain downlink data indicating an amount of data in a downlink buffer that is to be transmitted to the at least one UE,
generate, based on the obtained cycle parameter and the downlink data, an active UE set including a UE that needs to be allocated to the wireless resource, and
allocate the wireless resource to at least one active UE included in the generated active UE set.

12. The base station 100 of claim, wherein the cycle parameter comprises a Discontinuous Reception (DRX) cycle used to perform a Connected mode Discontinuous Reception (C-DRX) function on the at least one UE.

13. The base station 100 of any one of claims 11 and 12, wherein the at least one processor 1330 is further configured to:

identify, based on the obtained downlink data, downlink data for the first UE included in the at least one UE;
compare, based on the identifying of the downlink data for the first UE, expected downlink latency for the first UE with threshold downlink latency for the first UE;
compare, based on the identifying of the downlink data for the first UE, expected downlink User-Perceived Throughput (UPT) for the first UE with threshold downlink UPT for the first UE; and
determine, based on the compared result, whether to include the first UE in the active UE set.

14. The base station 100 of claim 13, wherein the threshold downlink UPT for the first UE and the threshold downlink latency for the first UE are set based on a Quality of Service Class Indicator (QCI) of a logical channel for the first UE.

15. The base station of any one of claims 13 and 14, wherein the at least one processor 1330 is further configured to:

in response to the expected downlink latency for the first UE being less than the threshold downlink latency for the first UE and the expected downlink UPT for the first UE being greater than or equal to the threshold downlink UPT for the first UE, determine not to include the first UE in the active UE set, and,
in response to the expected downlink latency for the first UE being greater than or equal to the threshold downlink latency for the first UE and the expected downlink UPT for the first UE being less than the threshold downlink UPT for the first UE, determine to include the first UE in the active UE set.

# FIG. 1

# FIG. 2

START

OBTAIN CYCLE PARAMETER INDICATING CYCLE WHICH BASE STATION USES TO TRANSMIT/RECEIVE DATA TO/FROM AT LEAST ONE UE — S210

OBTAIN DOWNLINK DATA INDICATING AMOUNT OF DATA IN DOWNLINK BUFFER THAT IS TO BE TRANSMITTED TO AT LEAST ONE UE — S220

GENERATE, BASED ON OBTAINED CYCLE PARAMETER AND DOWNLINK DATA, ACTIVE UE SET INCLUDING UE THAT NEEDS TO BE ALLOCATED WIRELESS RESOURCE — S230

ALLOCATE WIRELESS RESOURCE TO AT LEAST ONE ACTIVE UE INCLUDED IN GENERATED ACTIVE UE SET — S240

END

# FIG. 3

```
                    ( START )
                        │
                        ▼
┌──────────────────────────────────────────────────┐
│   IDENTIFY, BASED ON OBTAINED DOWNLINK DATA,       │ ─ S310
│  DOWNLINK DATA FOR FIRST UE INCLUDED IN AT LEAST ONE UE │
└──────────────────────────────────────────────────┘
                        │
                        ▼
┌──────────────────────────────────────────────────┐
│  COMPARE, BASED ON IDENTIFYING OF DOWNLINK DATA FOR │
│  FIRST UE, EXPECTED DOWNLINK LATENCY FOR FIRST UE WITH │ ─ S320
│       THRESHOLD DOWNLINK LATENCY FOR FIRST UE       │
└──────────────────────────────────────────────────┘
                        │
                        ▼
┌──────────────────────────────────────────────────┐
│  COMPARE, BASED ON IDENTIFYING OF DOWNLINK DATA FOR │
│   FIRST UE, EXPECTED DOWNLINK UPT FOR FIRST UE WITH  │ ─ S330
│        THRESHOLD DOWNLINK UPT FOR FIRST UE          │
└──────────────────────────────────────────────────┘
                        │
                        ▼
┌──────────────────────────────────────────────────┐
│  DETERMINE, BASED ON COMPARED RESULT, WHETHER TO    │ ─ S340
│        INCLUDE FIRST UE IN ACTIVE UE SET            │
└──────────────────────────────────────────────────┘
                        │
                        ▼
                    (  END  )
```

# FIG. 4

START

OBTAIN CYCLE PARAMETER INDICATING CYCLE WHICH BASE STATION USES TO TRANSMIT/RECEIVE DATA TO/FROM AT LEAST ONE UE — S410

OBTAIN DOWNLINK DATA INDICATING AMOUNT OF DATA IN DOWNLINK BUFFER THAT NEEDS TO BE TRANSMITTED TO AT LEAST ONE UE — S420

OBTAIN UPLINK DATA INDICATING AMOUNT OF DATA IN UPLINK BUFFER THAT NEEDS TO BE RECEIVED FROM AT LEAST ONE UE — S430

GENERATE DEFERRED UE SET INCLUDING UE DEFERRED FROM BEING ALLOCATED WIRELESS RESOURCE BY BASE STATION, BASED ON AT LEAST ONE OF OBTAINED CYCLE PARAMETER, DOWNLINK DATA, OR UPLINK DATA — S440

GENERATE ACTIVE UE SET BASED ON GENERATED DEFERRED UE SET — S450

ALLOCATE WIRELESS RESOURCE TO AT LEAST ONE ACTIVE UE INCLUDED IN ACTIVE UE SET — S460

END

# FIG. 5

START

IDENTIFY DOWNLINK DATA FOR SECOND UE INCLUDED IN AT LEAST ONE UE, BASED ON OBTAINED DOWNLINK DATA — S510

IDENTIFY UPLINK DATA FOR SECOND UE, BASED ON OBTAINED UPLINK DATA — S520

COMPARE EXPECTED DOWNLINK LATENCY FOR SECOND UE TO THRESHOLD DOWNLINK LATENCY FOR SECOND UE, BASED ON IDENTIFYING OF DOWNLINK DATA FOR SECOND UE — S530

COMPARE EXPECTED DOWNLINK UPT FOR SECOND UE TO THRESHOLD DOWNLINK UPT FOR SECOND UE, BASED ON IDENTIFYING OF DOWNLINK DATA FOR SECOND UE — S540

COMPARE EXPECTED UPLINK LATENCY FOR SECOND UE TO THRESHOLD UPLINK LATENCY FOR SECOND UE, BASED ON IDENTIFYING OF UPLINK DATA FOR SECOND UE — S550

COMPARE EXPECTED UPLINK UPT FOR SECOND UE TO THRESHOLD UPLINK UPT FOR SECOND UE, BASED ON IDENTIFYING OF UPLINK DATA FOR SECOND UE — S560

DETERMINE WHETHER TO INCLUDE SECOND UE IN DEFERRED UE SET — S570

END

# FIG. 6

START

S610

$d_n > 0?$ — No

Yes

S620

$\widehat{L}_{Next} \geq L_{th} \parallel \widehat{R}_{Next} < R_{th}$ — No

Yes

S630

INCLUDE N-TH UE IN ACTIVE UE SET

S640

$n = n + 1$

S650

$n < N?$ — Yes

No

END

# FIG. 7

```
                    ( START )
                        │
                        ▼
                 ╱──────────────╲   S710
                ╱   dₙ > 0?       ╲─────── No
                ╲                 ╱
                 ╲──────────────╱
                        │ Yes
                        ▼
           ╱────────────────────────╲   S720
          ╱  N-TH UE ∉ DEFERRED UE SET? ╲──── No
          ╲                            ╱
           ╲────────────────────────╱
                        │ Yes
                        ▼                S730
          ┌────────────────────────────────┐
          │ INCLUDE N-TH UE IN ACTIVE UE SET│
          └────────────────────────────────┘
                        │                S740
          ┌────────────────────────────────┐
          │         n = n + 1              │
          └────────────────────────────────┘
                        │
                        ▼
                 ╱──────────────╲   S750
       Yes ─────╱   n < N?       ╲
                ╲                 ╱
                 ╲──────────────╱
                        │ No
                        ▼
                     ( END )
```

Flowchart with decision S710 "$d_n > 0?$"; S720 "N-TH UE ∉ DEFERRED UE SET?"; S730 "INCLUDE N-TH UE IN ACTIVE UE SET"; S740 "$n = n + 1$"; S750 "$n < N?$".

# FIG. 8

START

S810
$d_n^{DL} > 0?$ —No→ S815 $d_n^{UL} > 0?$ —No→

↓Yes ↓Yes

S820
$\hat{L}_{Next}^{DL} < L_{th}^{DL}?$ —No→ S850 $\hat{L}_{Next}^{UL} < L_{th}^{UL}?$ —No→

↓Yes ↓Yes

S830
$\hat{R}_{Next}^{DL} \geq R_{th}^{DL}?$ —No→ S860 $\hat{R}_{Next}^{UL} \geq R_{th}^{UL}?$ —No→

↓Yes ↓Yes

S840
$d_n^{UL} > 0?$ —Yes→

↓No

S870
INCLUDE N-TH UE IN
DEFERRED UE SET

S880
n = n + 1

S890
Yes← n < N?

↓No

END

# FIG. 9

RLC — 910

MAC — 920

PHY — 930

MAC Scheduler — 922

MCS Decision

Active UE Selection

Compute Scheduling Priority

Resource Allocation

CYCLE PARAMETER OR DEFERRED UE SET

EP 4 626 074 A1

# FIG. 10

# FIG. 11

# FIG. 12

# FIG. 13

## INTERNATIONAL SEARCH REPORT

| International application No. |
|---|
| **PCT/KR2023/019516** |

| | | |
|---|---|---|
| **A.** | **CLASSIFICATION OF SUBJECT MATTER** | |

**H04W 28/22**(2009.01)i; **H04W 28/02**(2009.01)i; **H04W 76/28**(2018.01)i; **H04W 52/02**(2009.01)i

According to International Patent Classification (IPC) or to both national classification and IPC

| **B.** | **FIELDS SEARCHED** |
|---|---|

Minimum documentation searched (classification system followed by classification symbols)

H04W 28/22(2009.01); H04L 12/26(2006.01); H04L 12/801(2013.01); H04L 27/26(2006.01); H04W 28/02(2009.01); H04W 52/02(2009.01); H04W 68/02(2009.01); H04W 72/04(2009.01); H04W 76/28(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: C-DRX, downlink buffer, amount of data, resource allocation, active UE set, UPT(User-Perceived Throughput), QCI(QoS Class Indicator)

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| A | US 2016-0057044 A1 (KOC, Ali et al.) 25 February 2016 (2016-02-25)<br>See paragraphs [0036]-[0041]; and claim 1. | 1-15 |
| A | WO 2022-197223 A1 (TELEFONAKTIEBOLAGET LM ERICSSON (PUBL)) 22 September 2022 (2022-09-22)<br>See page 37, line 16 - page 39, line 35. | 1-15 |
| A | US 2016-0262041 A1 (TELEFONAKTIEBOLAGET L M ERICSSON (PUBL)) 08 September 2016 (2016-09-08)<br>See paragraphs [0042]-[0059]; and figures 2-3. | 1-15 |
| A | US 2015-0201375 A1 (INTEL CORPORATION) 16 July 2015 (2015-07-16)<br>See paragraphs [0043]-[0054]; and figures 3-4. | 1-15 |
| A | US 2019-0349886 A1 (LG ELECTRONICS INC.) 14 November 2019 (2019-11-14)<br>See paragraphs [0089]-[0098]; and figure 6. | 1-15 |

☐ Further documents are listed in the continuation of Box C.     ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **12 March 2024** | **12 March 2024** |

| Name and mailing address of the ISA/KR | Authorized officer |
|---|---|
| **Korean Intellectual Property Office**<br>**Government Complex-Daejeon Building 4, 189 Cheongsa-**<br>**ro, Seo-gu, Daejeon 35208** | |
| Facsimile No. **+82-42-481-8578** | Telephone No. |

Form PCT/ISA/210 (second sheet) (July 2022)

# EP 4 626 074 A1

## INTERNATIONAL SEARCH REPORT
### Information on patent family members

International application No.

**PCT/KR2023/019516**

| Patent document cited in search report | | | Publication date (day/month/year) | Patent family member(s) | | | Publication date (day/month/year) |
|---|---|---|---|---|---|---|---|
| US | 2016-0057044 | A1 | 25 February 2016 | EP | 2995012 | A1 | 16 March 2016 |
| | | | | EP | 2995019 | A1 | 16 March 2016 |
| | | | | EP | 2995019 | B1 | 30 January 2019 |
| | | | | EP | 2995030 | A1 | 16 March 2016 |
| | | | | EP | 2995057 | A1 | 16 March 2016 |
| | | | | EP | 2995105 | A1 | 16 March 2016 |
| | | | | EP | 2995105 | B1 | 01 January 2020 |
| | | | | EP | 3667944 | A1 | 17 June 2020 |
| | | | | EP | 3667944 | B1 | 16 February 2022 |
| | | | | US | 10153816 | B2 | 11 December 2018 |
| | | | | US | 10164693 | B2 | 25 December 2018 |
| | | | | US | 10523286 | B2 | 31 December 2019 |
| | | | | US | 11337062 | B2 | 17 May 2022 |
| | | | | US | 2016-0029417 | A1 | 28 January 2016 |
| | | | | US | 2016-0044690 | A1 | 11 February 2016 |
| | | | | US | 2016-0057636 | A1 | 25 February 2016 |
| | | | | US | 2016-0057797 | A1 | 25 February 2016 |
| | | | | US | 2016-0065290 | A1 | 03 March 2016 |
| | | | | US | 2016-0113050 | A1 | 21 April 2016 |
| | | | | US | 2016-0157095 | A1 | 02 June 2016 |
| | | | | US | 2019-0089425 | A1 | 21 March 2019 |
| | | | | US | 2020-0136684 | A1 | 30 April 2020 |
| | | | | US | 9900772 | B2 | 20 February 2018 |
| | | | | US | 9954587 | B2 | 24 April 2018 |
| | | | | WO | 2014-182338 | A1 | 13 November 2014 |
| | | | | WO | 2014-182339 | A1 | 13 November 2014 |
| | | | | WO | 2014-182340 | A1 | 13 November 2014 |
| | | | | WO | 2014-182382 | A1 | 13 November 2014 |
| | | | | WO | 2014-182383 | A1 | 13 November 2014 |
| | | | | WO | 2014-182388 | A1 | 13 November 2014 |
| | | | | WO | 2014-182774 | A1 | 13 November 2014 |
| | | | | WO | 2014-182911 | A1 | 13 November 2014 |
| WO | 2022-197223 | A1 | 22 September 2022 | None | | | |
| US | 2016-0262041 | A1 | 08 September 2016 | EP | 3162127 | A1 | 03 May 2017 |
| | | | | EP | 3162127 | B1 | 28 February 2018 |
| | | | | US | 10477428 | B2 | 12 November 2019 |
| | | | | US | 2017-0318492 | A1 | 02 November 2017 |
| | | | | US | 9723511 | B2 | 01 August 2017 |
| | | | | WO | 2015-197431 | A1 | 30 December 2015 |
| US | 2015-0201375 | A1 | 16 July 2015 | CN | 104472007 | A | 25 March 2015 |
| | | | | CN | 104472007 | B | 09 April 2019 |
| | | | | EP | 2880951 | A1 | 10 June 2015 |
| | | | | EP | 2880951 | B1 | 21 March 2018 |
| | | | | JP | 2015-526042 | A | 07 September 2015 |
| | | | | JP | 5897216 | B2 | 30 March 2016 |
| | | | | KR | 10-1624994 | B1 | 27 May 2016 |
| | | | | KR | 10-2015-0020630 | A | 26 February 2015 |
| | | | | US | 9237478 | B2 | 12 January 2016 |
| | | | | WO | 2014-022847 | A1 | 06 February 2014 |
| US | 2019-0349886 | A1 | 14 November 2019 | EP | 3554183 | A1 | 16 October 2019 |

Form PCT/ISA/210 (patent family annex) (July 2022)

36

## INTERNATIONAL SEARCH REPORT
### Information on patent family members

International application No.

**PCT/KR2023/019516**

| Patent document cited in search report | Publication date (day/month/year) | Patent family member(s) | | Publication date (day/month/year) |
|---|---|---|---|---|
| | | EP | 3554183 B1 | 03 March 2021 |
| | | JP | 2020-504536 A | 06 February 2020 |
| | | JP | 6918945 B2 | 11 August 2021 |
| | | KR | 10-2019-0082968 A | 10 July 2019 |
| | | KR | 10-2238945 B1 | 12 April 2021 |
| | | US | 10708884 B2 | 07 July 2020 |
| | | WO | 2018-128463 A1 | 12 July 2018 |

Form PCT/ISA/210 (patent family annex) (July 2022)